# EUROPEAN PATENT SPECIFICATION

(11) **EP 2 693 552 B1**
(45) Date of publication and mention of the grant of the patent: **09.11.2016**
(21) Application number: 12765616.3
(22) Date of filing: 08.03.2012
(51) Int. Cl.: H01M 8/04746, H01M 8/0438, H01M 8/04089

(54) **FUEL CELL SYSTEM AND OPERATION METHOD THEREOF**
BRENNSTOFFZELLENSYSTEM UND BETRIEBSVERFAHREN DAFÜR
SYSTÈME DE PILE À COMBUSTIBLE ET SON PROCÉDÉ DE FONCTIONNEMENT

(30) Priority: 31.03.2011 JP 2011077617
(43) Date of publication of application: 05.02.2014
(73) Proprietor: Panasonic Corporation, Kadoma-shi, Osaka 571-8501 (JP)
(72) Inventor: KOKUBU, Hirofumi, Osaka 540-6207 (JP); URATA, Takayuki, Osaka 540-6207 (JP); NAKAMURA, Akinari, Osaka 540-6207 (JP)
(74) Representative: Grünecker Patent- und Rechtsanwälte PartG mbB
(86) International application number: PCT/JP2012/001596
(87) International publication number: WO 2012/132259

(56) References cited:
- WO-A1-2005/041333
- WO-A1-2010/113519
- JP-A- 2000 255 499
- JP-A- 2004 192 958
- JP-A- 2009 093 966
- JP-A- 2009 093 966
- JP-A- 2009 094 000
- US-A1- 2006 088 742
- US-A1- 2007 128 488

## Description

### Technical Field

The present invention relates to a fuel cell system including a fuel cell configured to generate electric power using a hydrogen-containing fuel gas and an oxygen-containing oxidizing gas, and a method of operating the fuel cell system.

### Background Art

A fuel cell is a device configured to cause an electrochemical reaction between a hydrogen-containing fuel gas and an oxygen-containing oxidizing gas by a catalyst to generate electric power and heat. Regarding a fuel cell system including such a fuel cell, it is known that to suppress deterioration of electrodes by oxidation and melt of the electrodes during stand-by of the fuel cell system, a fuel gas is tilled in an anode, and an inactive gas is filled in a cathode(see PTL 1, for example).

In the fuel cell system disclosed in PTL 1, to fill the cathode with the inactive gas, valves configured to open and close passages are respectively disposed on a passage through which the oxidizing gas is supplied to the fuel cell and a passage through which the oxidizing gas is discharged from the fuel cell.

In such a fuel cell system, it is important to detect failures of these valves. For example, if the valve disposed on the passage through which the oxidizing gas is supplied to the fuel cell remains open although a close command signal has been transmitted to the valve, and the valve is left in an open state, there is a possibility that the catalyst is oxidized during the stop of the fuel cell, and the fuel cell deteriorates. Therefore, it is necessary to detect whether or not the valve disposed on the passage through which the oxidizing gas flows normally becomes a closed state when the close command signal is transmitted to the valve.

Here, a fuel cell system configured for the purpose of detecting an operation failure of a valve disposed on a passage is known (see PTL 2, for example). Fig. 16 is a schematic diagram showing a schematic configuration of the fuel cell system disclosed in PTL 2.

As shown in Fig. 16, a fuel cell system 201 disclosed in PTL 2 includes: a fuel cell stack 202; an air compressor 213 configured to supply an oxidation gas to an oxidation gas passage 202A of the fuel cell stack 202 through an oxidation gas supply passage 214; and a cathode pressure gauge 221 disposed on an oxidation gas discharge passage 215 through which the oxidation gas unconsumed in the fuel cell stack 202 flows. An oxidation gas supply shut valve 217 is disposed on a portion of the oxidation gas supply passage 214. In addition, an oxidation gas discharge shut valve 220 is disposed on a portion of the oxidation gas discharge passage 215, the portion being located downstream of the cathode pressure gauge 221.

According to the fuel cell system 201 disclosed in PTL 2, after the stop of the operation of the fuel cell system 201, the oxidation gas supply shut valve 217 and the oxidation gas discharge shut valve 220 are closed, and the existence or non-existence of each of the failures of the oxidation gas supply shut valve 217 and the oxidation gas discharge shut valve 220 is determined based on the inclination of time variation of pressure detected by the cathode pressure gauge 221.

US 2007/0128488 A1 relates to a fuel cell system including a branch anode gas supply pipe and a branch cathode gas supply pipe. JP 2000 255499 A relates to a failure detecting device of a thruster.

### Citation List

### Patent Literature

PTL 1: Japanese Laid-Open Patent Application Publication No. 2005-71778
PTL 2: Japanese Laid-Open Patent Application Publication No. 2009-94000

### Summary of Invention

### Technical Problem

However, according to the fuel cell system 201 described in PTL 1, since the existence or non-existence of each of the failures of the oxidation gas supply shut valve 217 and the oxidation gas discharge shut valve 220 is determined based on the inclination of time variation of pressure detected by the cathode pressure gauge 221, it takes time to detect the failure of the valve. Thus, there is still room for improvement.

The present invention was made to solve the above problem, and an object of the present invention is to provide a fuel cell system capable of detecting the failure of the valve more quickly than conventional fuel cell systems, and a method of operating the fuel cell system.

### Solution to Problem

In order to solve the above problems, a fuel cell system according to the present invention is defined in claim 1.

Here, the first threshold is, for example, a flow rate lower than a flow rate (hereinafter referred to as a "branched supply amount") of the oxidizing gas flowing through the oxidizing gas branch passage when the oxidizing gas supply unit is activated with the on-off valve normally closed. In order to prevent misdetection, the first threshold may be a flow rate that is equal to or higher than 10% of the branched supply amount. In order to further prevent the misdetection, the first threshold may be a value between 30% and 70% of the branched supply amount.

With this, if the on-off valve to which the close signal has been transmitted is in an open state, the oxidizing gas is supplied to the fuel cell, and the flow rate of the oxidizing gas flowing through the oxidizing gas branch passage changes (decreases). Therefore, the open failure of the on-off valve can be determined quickly. Thus, the reliability of the fuel cell system improves.

The open failure of the on-off valve denotes a case where the valve is in an open state although a close command signal has been transmitted to the valve. The open failure of the on-off valve occurs, for example, in a case where a valve element remains open due to dirt or the like or in a case where a spring constituting the valve has broken.

A method of operating a fuel cell system according to the present invention is defined in claim 11. Further advantageous embodiments are defined in the dependent claims.

### Advantageous Effects of Invention

According to the fuel cell system of the present invention and the method of operating the fuel cell system, the failure of the on-off valve can be detected more quickly than conventional fuel cell systems.

### Brief Description of Drawings

[Fig. 1] Fig. 1 is a schematic diagram showing the configuration of a fuel cell system according to Embodiment 1 of the present invention.
[Fig. 2] Fig. 2 is a flow chart showing an open failure confirming operation of an on-off valve of the fuel cell system according to Embodiment 1 of the present invention.
[Fig. 3] Fig. 3 is a schematic diagram showing the configuration of the fuel cell system according to Modification Example 1 of Embodiment 1.
[Fig. 4] Fig. 4 is a flow chart showing the open failure confirming operation of the on-off valve of the fuel cell system according to Modification Example 1 of Embodiment 1.
[Fig. 5] Fig. 5 is a schematic diagram showing the configuration of the fuel cell system according to Modification Example 2 of Embodiment 1.
[Fig. 6A] Fig. 6A is a flow chart showing the open failure confirming operation of the on-off valve of the fuel cell system according to Modification Example 2 of Embodiment 1.
[Fig. 6B] Fig. 6B is a flow chart showing the open failure confirming operation of the on-off valve of the fuel cell system according to Modification Example 2 of Embodiment 1.
[Fig. 7] Fig. 7 is a flow chart showing the open failure confirming operation of the on-off valve of the fuel cell system according to Embodiment 2 of the present invention.
[Fig. 8] Fig. 8 is a flow chart showing the open failure confirming operation of the on-off valve of the fuel cell system according to Modification Example 1 of Embodiment 2.
[Fig. 9] Fig. 9 is a flow chart showing the open failure confirming operation of the on-off valve of the fuel cell system according to Embodiment 3 of the present invention.
[Fig. 10] Fig. 10 is a schematic diagram showing the configuration of the fuel cell system according to Embodiment 4 of the present invention.
[Fig. 11] Fig. 11 is a flow chart showing the open failure confirming operation of the on-off valve of the fuel cell system according to Embodiment 4 of the present invention.
[Fig. 12] Fig. 12 is a flow chart showing the open failure confirming operation of the on-off valve of the fuel cell system according to Modification Example 1 of Embodiment 4.
[Fig. 13] Fig. 13 is a schematic diagram showing the configuration of the fuel cell system according to Embodiment 5 of the present invention.
[Fig. 14] Fig. 14 is a schematic diagram showing the configuration of the fuel cell system according to Embodiment 6 of the present invention.
[Fig. 15] Fig. 15 is a schematic diagram showing the configuration of the fuel cell system according to Embodiment 7 of the present invention.

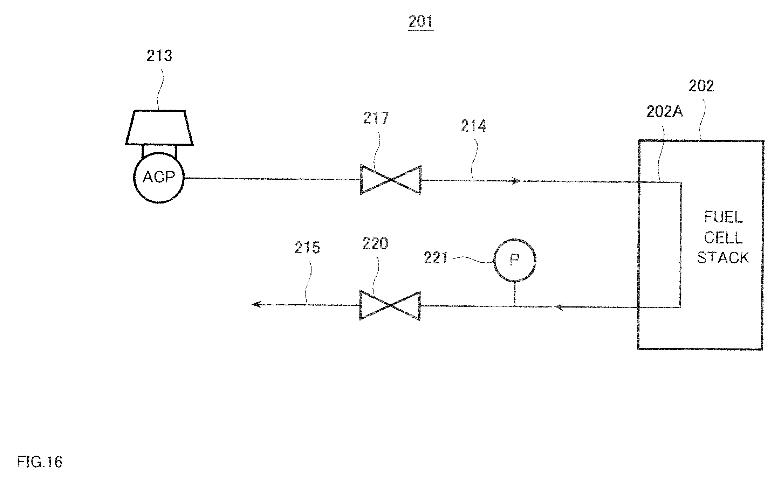

[Fig. 16] Fig. 16 is a schematic diagram showing the schematic configuration of the fuel cell system disclosed in PTL 2.

### Description of Embodiments

Hereinafter, preferred embodiments of a fuel cell system of the present invention will be explained in reference to the drawings. However, the present invention is not limited to these embodiments. In the drawings, the same reference signs are used for the same or corresponding components, and a repetition of the same explanation is avoided. Further, in the drawings, only components necessary to explain the present invention are shown, and the other components may be omitted. Furthermore, each of the drawings conceptually explains the present invention. For ease of understanding of the present invention, the sizes, ratios, and numbers of respective components may be exaggerated or simplified according to need.

### Embodiment 1

A fuel cell system according to Embodiment 1 of the present invention includes: a fuel cell; a fuel gas supply unit configured to supply a fuel gas to the fuel cell; an oxidizing gas supply unit configured to supply an oxidizing gas to the fuel cell; an oxidizing gas supply passage through which the oxidizing gas is supplied from the oxidizing gas supply unit to the fuel cell; an oxidizing gas discharge passage through which the oxidizing gas unconsumed in the fuel cell is discharged from the fuel cell; an oxidizing gas branch passage configured to branch from the oxidizing gas supply passage; an on-off valve disposed on at least one of the oxidizing gas discharge passage and a portion of the oxidizing gas supply passage, the portion being located between the fuel cell and a branched portion where the oxidizing gas branch passage branches from the oxidizing gas supply passage; an oxidizing gas supply amount measuring unit disposed on the oxidizing gas branch passage and configured to measure a supply amount of the oxidizing gas; and a controller configured to determine that the on-off valve is normal in a case where the supply amount of the oxidizing gas measured by the oxidizing gas supply amount measuring unit is equal to or larger than a preset first threshold when the controller has activated the oxidizing gas supply unit and output a close signal to the on-off valve, and determine that the on-off valve is abnormal in a case where the supply amount of the oxidizing gas measured by the oxidizing gas supply amount measuring unit is smaller than the preset first threshold when the controller has activated the oxidizing gas supply unit and output the close signal to the on-off valve.

In the fuel cell system according to Embodiment 1, the fuel gas supply unit may include a selective oxidizer configured to remove carbon monoxide in the fuel gas, and a downstream end of the oxidizing gas branch passage may be connected to the selective oxidizer.

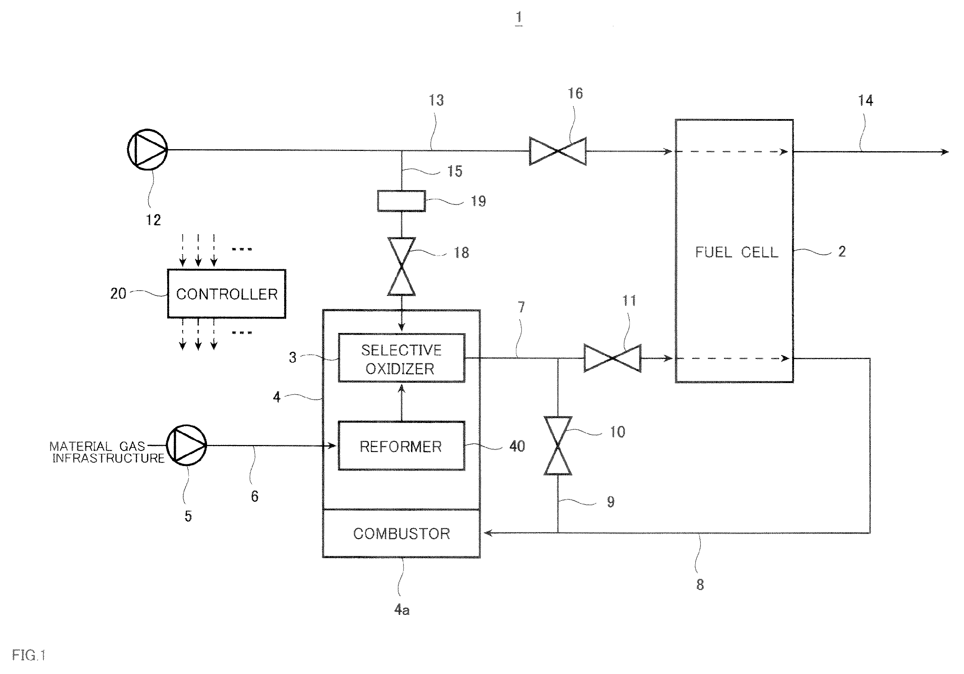

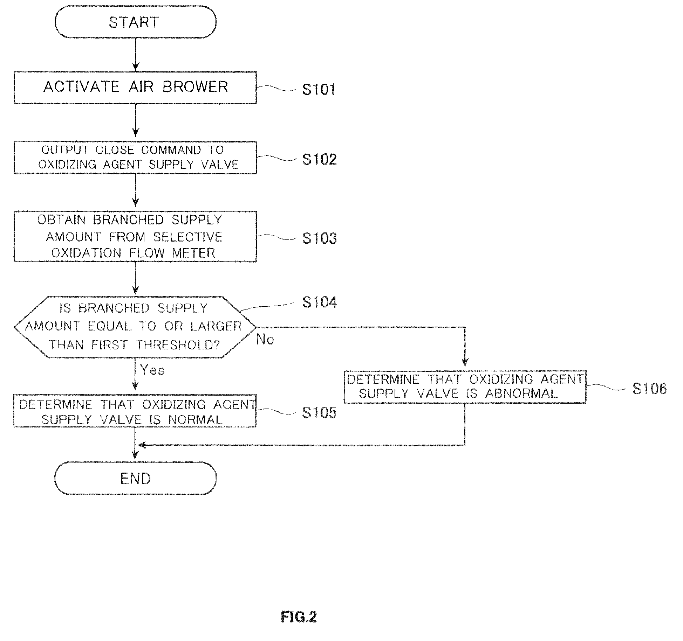

Hereinafter, one example of the fuel cell system according to Embodiment I will be explained in reference to Figs. 1 and 2.

### Configuration

Fig. 1 is a schematic diagram showing the configuration of the fuel cell system according to Embodiment 1 of the present invention.

As shown in Fig. 1, a fuel cell system 1 according to the present embodiment includes: a fuel cell 2 configured to generate electric power using a hydrogen-containing fuel gas and an oxygen-containing oxidizing gas; a hydrogen generator 4 that is one example of a fuel gas supply unit configured to supply the fuel gas to the fuel cell 2; and a material blower 5 that is a material gas supply unit configured to supply a material gas to the hydrogen generator 4.

The hydrogen generator 4 includes a reformer 40 and a selective oxidizer 3. The material gas that is a hydrocarbon-based fuel, such as a natural gas or a LPG, is supplied to the hydrogen generator 4, and the reformer 40 performs reforming using the material gas and steam. Thus, a reformed gas having a high hydrogen concentration is generated. Further, the selective oxidizer 3 of the hydrogen generator 4 causes a selective oxidation reaction of the reformed gas generated by the reformer 40. Thus, the fuel gas whose carbon monoxide concentration is reduced is generated.

A downstream end of a below-described oxidizing gas branch passage 15 is connected to the selective oxidizer 3. The hydrogen generator 4 may include a shift converter configured to reduce, by a shift reaction, carbon monoxide contained in the hydrogen-containing gas generated by the reformer 40.

The fuel cell system 1 further includes: a combustor 4a configured to combusts, that is, reutilizes the unreacted fuel gas discharged from the fuel cell 2; a material gas utilizing device (not shown); a material gas supply passage 6 by which the material blower 5 and the hydrogen generator 4 communicate with each other; and a fuel gas passage 7 by which the hydrogen generator 4 and the fuel cell 2 communicate with each other and through which the fuel gas generated by the hydrogen generator 4 is supplied to the fuel cell 2.

The fuel cell system 1 further includes: an exhaust gas passage 8 by which the fuel cell 2 and the combustor 4a communicate with each other and through which the fuel gas is supplied from the fuel cell 2 to the combustor 4a; and a bypass passage 9 configured to connect the fuel gas passage 7 and the exhaust gas passage 8 while bypassing the fuel cell 2. A bypass valve 10 configured to allow and block the flow in the bypass passage 9, that is, open and close the bypass passage 9 is disposed on the bypass passage 9. An anode inlet valve 11 configured to open and close the fuel gas passage 7 is disposed on the fuel gas passage 7 so as to be located between the fuel cell 2 and a branch point where the bypass passage 9 branches from the fuel gas passage 7.

Further, the fuel cell system 1 includes: an air blower 12 that is one example of an oxidizing gas supply unit; an oxidizing gas supply passage 13 by which the air blower 12 and the fuel cell 2 communicate with each other; and an oxidizing gas discharge passage 14 through which the oxidizing gas is discharged from the fuel cell 2 to the atmosphere. An oxidizing agent supply valve 16 that is one example of an on-off valve is disposed on a portion of the oxidizing gas supply passage 13. The oxidizing agent supply valve 16 is configured to allow and block the flow of the oxidizing gas, that is, open and close the oxidizing gas supply passage 13.

An upstream end of the oxidizing gas branch passage 15 is connected to a portion of the oxidizing gas supply passage 13, the portion being located upstream of the oxidizing agent supply valve 16. The downstream end of the oxidizing gas branch passage 15 is connected to the selective oxidizer 3. To be specific, the oxidizing gas branch passage 15 branches from the oxidizing gas supply passage 13. A selective oxidation air valve 18 is disposed on a portion of the oxidizing gas branch passage 15. The selective oxidation air valve 18 is configured to allow and block the flow of the oxidizing gas, that is, open and close the oxidizing gas branch passage 15.

A selective oxidation flow meter 19 that is one example of an oxidizing gas supply amount measuring unit is disposed on a portion of the oxidizing gas branch passage 15, the portion being located upstream of the selective oxidation air valve 18. The selective oxidation flow meter 19 is configured to detect the flow rate of the oxidizing gas (air) flowing through the oxidizing gas branch passage 15 and outputs the detected flow rate to a controller 20.

The controller 20 includes a calculation processing module, such as a microprocessor or a CPU, and a storage module configured to store programs for executing respective control operations and constituted by, for example, a memory. The controller 20 performs various control operations regarding the fuel cell system 1 in such a manner that the calculation processing module reads out and executes predetermined control programs stored in the storage module. The controller 20 controls, for example, the material blower 5, the bypass valve 10, the anode inlet valve 11, the air blower 12, the oxidizing agent supply valve 16, an oxidizing agent discharge valve 17, and the selective oxidation air valve 18.

The controller 20 controls the entire fuel cell system 1 so as to perform a start-up step, a power generating step after the start-up step, a stop process step after the power generating step, and a stand-by state after the stop process step.

The start-up step is a step of, for example, in a case where a start-up command has been input to the controller 20 or in a case where a preset start-up time of the controller 20 has come, generating the fuel gas to be supplied to the fuel cell 2. Specifically, the start-up step is a step of: heating the reformer 40 and the like of the hydrogen generator 4 by the combustor 4a up to a temperature at which the fuel gas can be generated; supplying the material gas to the hydrogen generator 4; and generating the fuel gas.

The power generating step is a step of performing power generation of the fuel cell 2 and includes a fuel gas supplying step of supplying the fuel gas to the fuel cell 2 and an oxidizing gas supplying step of supplying the oxidizing gas to the fuel cell 2 after the start of the fuel gas supplying step.

The stop process step is a step of performing a power generation stop process of the fuel cell 2, for example, in a case where a power generation stop command has been input to the controller 20 or in a case where a preset power generation stop time of the controller 20 has come. The stand-by state is a state after the stop process step, that is, a state where the fuel cell system 1 is standing by until the next start-up of the fuel cell system 1 is executed.

The controller 20 may be constituted by a single controller or may be constituted by a group of a plurality of controllers which cooperate to execute control operations of the fuel cell system 1. The controller 20 may be constituted by a microcontroller or may be constituted by a MPU, a PLC (Programmable Logic Controller), a logic circuit, or the like.

### Operations

Next, a power generating operation of the fuel cell system 1 according to Embodiment 1 will be explained in reference to Fig. 1.

First, the material gas, such as a natural gas or a LPG, is supplied to the hydrogen generator 4 by the material blower 5. In the hydrogen generator 4, the supplied material is reformed by steam, and the reformed gas containing hydrogen as a major component is generated. The generated reformed gas is supplied to the selective oxidizer 3.

Air is supplied from the air blower 12 through the oxidizing gas branch passage 15 to the selective oxidizer 3, and carbon monoxide in the reformed gas is selectively oxidized by a catalyst in the selective oxidizer 3 to become carbon dioxide. Thus, the fuel gas having an extremely low carbon monoxide concentration is generated. The generated fuel gas is supplied to a fuel electrode side of the fuel cell 2.

On the other hand, the oxidizing agent supply valve 16 is opened, and the air is supplied as the oxidizing gas by the air blower 12 through the oxidizing gas supply passage 13 to a cathode side of the fuel cell 2. The unreacted oxidizing gas discharged from the fuel cell 2 without being utilized in the reaction is discharged through the oxidizing gas discharge passage 14 to the outside. As above, the fuel cell 2 causes an electrochemical reaction using the supplied fuel gas and oxidizing gas to generate electric power and heat.

Here, if a state where the oxidizing agent supply valve 16 remains open although the controller 20 has transmitted a close signal to the oxidizing agent supply valve 16 is left as it is (hereinafter, this state is referred to as an "open failure"), the oxidizing gas is continuously supplied to the fuel cell 2 even during the operation stop of the fuel cell 2. Therefore, the catalyst contained in the fuel cell 2 is oxidized, and this deteriorates the fuel cell 2. On this account, it is necessary to detect the open failure of the oxidizing agent supply valve 16.

Here, the fuel cell system 1 according to the present embodiment detects the open failure of the oxidizing agent supply valve 16 in the following manner.

Fig. 2 is a flow chart showing an open failure confirming operation of the on-off valve of the fuel cell system according to Embodiment 1 of the present invention.

As shown in Fig. 2, the controller 20 activates the air blower 12 (Step S101) and outputs a close command (close signal) to the oxidizing agent supply valve 16 (Step S102). When the selective oxidation air valve 18 is in a closed state, the controller 20 outputs an open command to the selective oxidation air valve 18.

Next, the controller 20 obtains from the selective oxidation flow meter 19 a flow rate (hereinafter referred to as a "branched supply amount") of the oxidizing gas (air) flowing through the oxidizing gas branch passage 15, the flow rate being detected by the selective oxidation flow meter 19

(Step S103). Next, the controller 20 determines whether or not the branched supply amount obtained in Step S103 is equal to or larger than a preset first threshold (Step S104).

Here, the first threshold is, for example, a flow rate lower than the flow rate (branched supply amount) of the oxidizing gas flowing through the oxidizing gas branch passage 15 when the air blower 12 is activated with the oxidizing agent supply valve 16 normally closed. In order to prevent misdetection, the first threshold may be a flow rate that is equal to or higher than 10% of the branched supply amount. In order to further prevent the misdetection, the first threshold may be a value between 30% and 70% of the branched supply amount. In Embodiment 1, the first threshold is set to 50% of the branched supply amount.

In a case where the branched supply amount obtained in Step S103 is equal to or larger than the first threshold (Yes in Step S104), the controller 20 determines that the oxidizing agent supply valve 16 is normal (Step S105). Then, the controller 20 terminates the present flow. In contrast, in a case where the branched supply amount obtained in Step S103 is smaller than the first threshold (No in Step S104), the controller 20 determines that the oxidizing agent supply valve 16 is abnormal (Step S106). Then, the controller 20 terminates the present flow.

In a case where the oxidizing agent supply valve 16 is abnormal, the controller 20 may inform a user, a maintenance company, or the like that the oxidizing agent supply valve 16 is abnormal. Examples of the informing method include a method of displaying the abnormality of the oxidizing agent supply valve 16 on a display of a remote controller, a mobile phone, a smartphone, a tablet computer, or the like or a method of informing that the oxidizing agent supply valve 16 is abnormal by sound using a speaker or the like.

The fuel cell system 1 according to Embodiment 1 configured as above can determine the open failure of the oxidizing agent supply valve 16 more quickly than the conventional fuel cell systems. Thus, the reliability of the fuel cell system 1 can be improved.

Especially, in the fuel cell system 201 disclosed in PTL 1, the cathode pressure gauge 221 is used to determine the failure of the oxidation gas supply shut valve 217 and the failure of the oxidation gas discharge shut valve 220. In a case where the temperature of a gas detected by the cathode pressure gauge 221 changes, the pressure of the gas also changes. Therefore, the cathode pressure gauge 221 may misdetect the pressure of the gas.

For example, in a case where both the oxidation gas supply shut valve 217 and the oxidation gas discharge shut valve 220 are closed, a detection target gas to be detected by the cathode pressure gauge 221 exists in a closed space. Therefore, the cathode pressure gauge 221 can detect predetermined pressure. However, if the temperature of the detection target gas decreases significantly, the pressure of the detection target gas also decreases, so that the cathode pressure gauge 221 detects the pressure decrease of the detection target gas even though both the oxidation gas supply shut valve 217 and the oxidation gas discharge shut valve 220 are closed. In this case, the cathode pressure gauge 221 erroneously determines that the detection target gas is leaking to a passage since at least one of the oxidation gas supply shut valve 217 and the oxidation gas discharge shut valve 220 is causing the open failure.

Such a problem is solved by the fuel cell system 1 according to Embodiment 1. To be specific, the fuel cell system 1 according to Embodiment 1 can determine the open failure of the on-off valve quickly without using a pressure detecting portion. Thus, the reliability of the fuel cell system 1 can be improved.

### Modification Example 1

Next, Modification Example of the fuel cell system according to Embodiment 1 will be explained.

The fuel cell system according to Modification Example 1 of Embodiment 1 is configured such that the on-off valve is disposed on the oxidizing gas discharge passage.

### Configuration

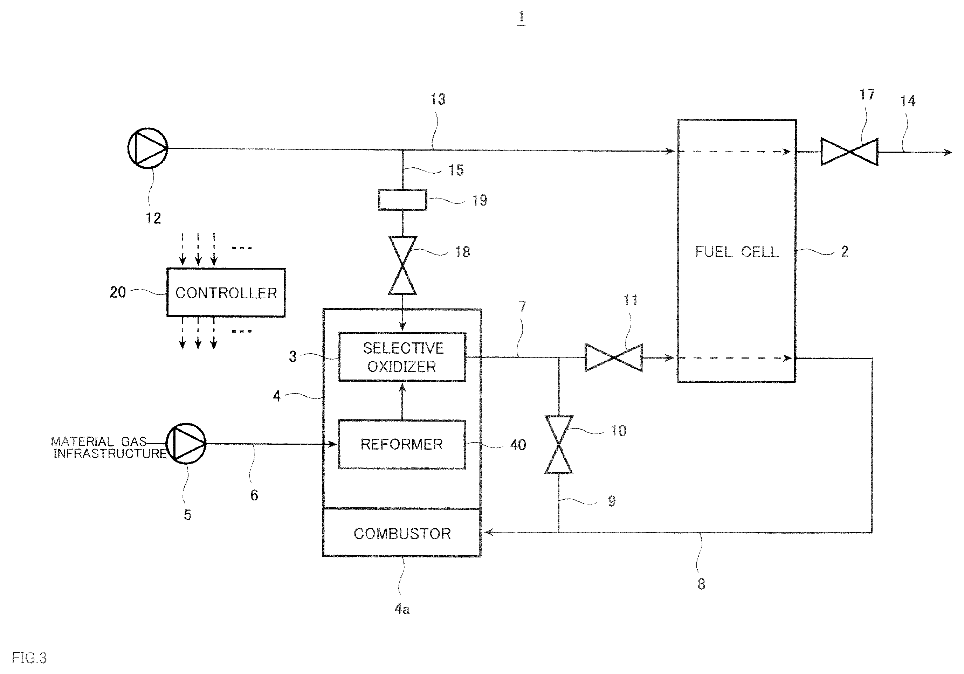

Fig. 3 is a schematic diagram showing the configuration of the fuel cell system according to Modification Example 1 of Embodiment 1.

As shown in Fig. 3, the fuel cell system 1 according to Modification Example 1 of Embodiment 1 is the same in basic configuration as the fuel cell system 1 according to Embodiment 1 but is different from the fuel cell system 1 according to Embodiment 1 in that: the oxidizing agent supply valve 16 is not provided; and the oxidizing agent discharge valve 17 that is one example of the on-off valve is disposed on the oxidizing gas discharge passage 14.

### Operations

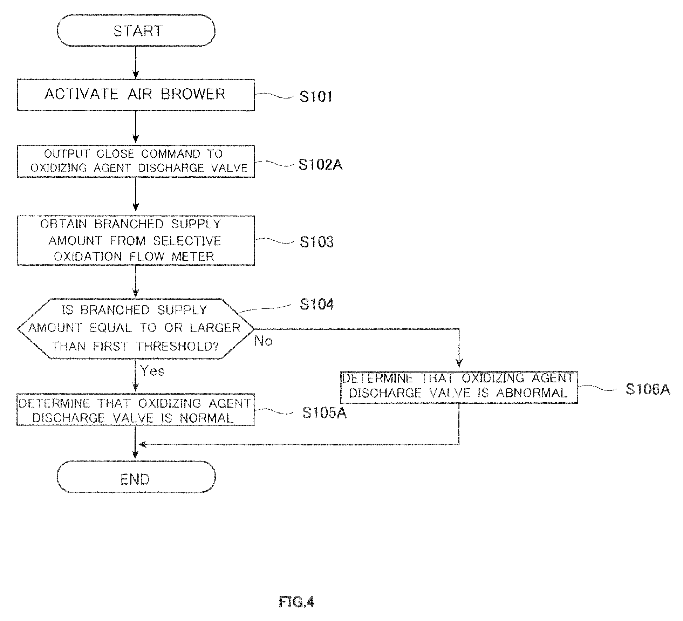

Fig. 4 is a flow chart showing the open failure confirming operation of the on-off valve of the fuel cell system according to Modification Example 1 of Embodiment 1.

As shown in Fig. 4, the open failure confirming operation of the oxidizing agent discharge valve 17 of the fuel cell system 1 according to Modification Example 1 is basically the same as the open failure confirming operation of the fuel cell system 1 according to Embodiment 1 but is different from the open failure confirming operation of the fuel cell system 1 according to Embodiment 1 in that Steps S102A, S105A, and S106A are executed instead of Steps S102, S105, and S106.

Specifically, in Step S102A, the controller 20 outputs the close command (close signal) to the oxidizing agent discharge valve 17. In a case where the branched supply amount obtained in Step S103 is equal to or larger than the first threshold (Yes in Step S104), the controller 20 determines that the oxidizing agent discharge valve 17 is normal (Step S105A). Then, the controller 20 terminates the present flow. In contrast, in a case where the branched supply amount obtained in Step S103 is smaller than the first threshold (No in Step S104), the controller 20 determines that the oxidizing agent discharge valve 17 is abnormal (Step S106A). Then, the controller 20 terminates the present flow.

The fuel cell system 1 according to Modification Example 1 configured as above also has the same operational advantages as the fuel cell system 1 according to Embodiment 1.

### Modification Example 2

The fuel cell system according to Modification Example 2 of Embodiment I is configured such that the on-off valves are respectively disposed on the oxidizing gas discharge passage and a portion of the oxidizing gas supply passage, the portion being located between the fuel cell and a branched portion where the oxidizing gas branch passage branches from the oxidizing gas supply passage.

### Configuration

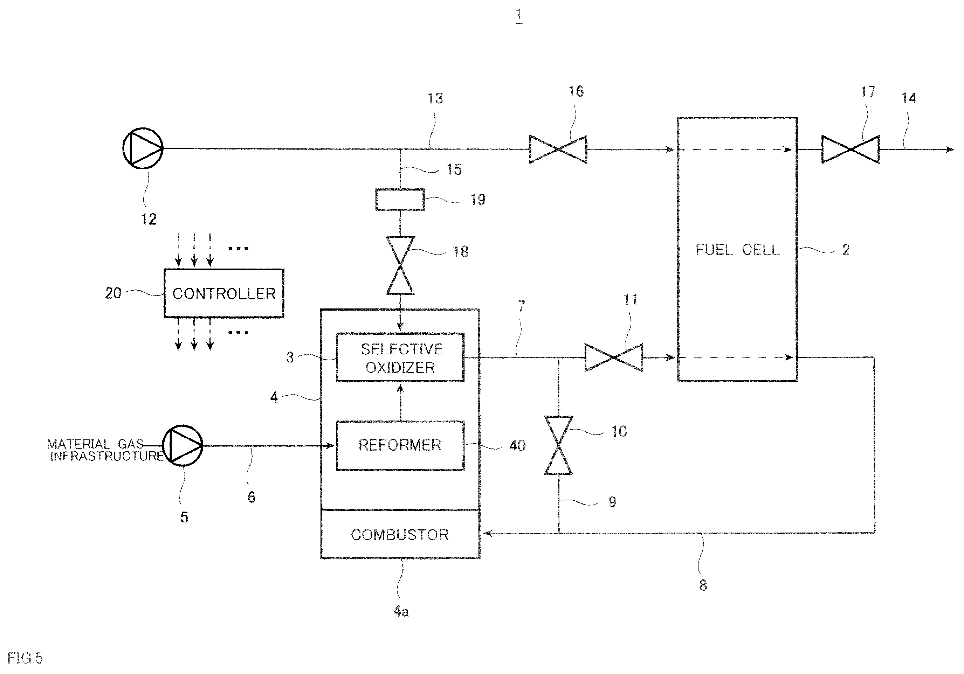

Fig. 5 is a schematic diagram showing the configuration of the fuel cell system according to Modification Example 2 of Embodiment 1.

As shown in Fig. 5, the fuel cell system 1 according to Modification Example 1 of Embodiment 1 is the same in basic configuration as the fuel cell system 1 according to Embodiment 1 but is different from the fuel cell system 1 according to Embodiment 1 in that the on-off valve is constituted by the oxidizing agent supply valve 16 and the oxidizing agent discharge valve 17, and the oxidizing agent discharge valve 17 is disposed on the oxidizing gas discharge passage 14.

### Operations

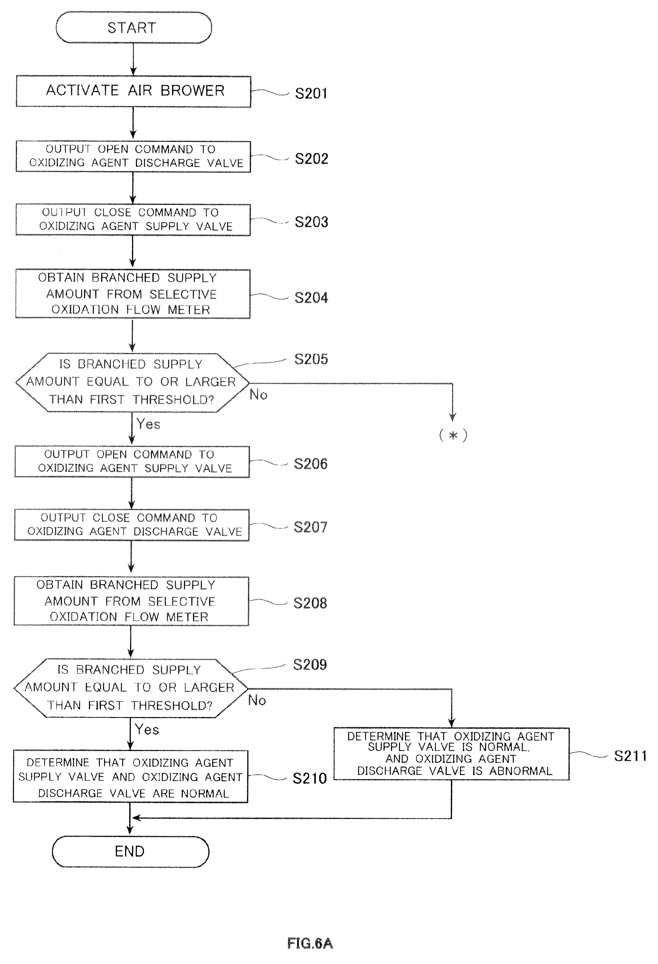

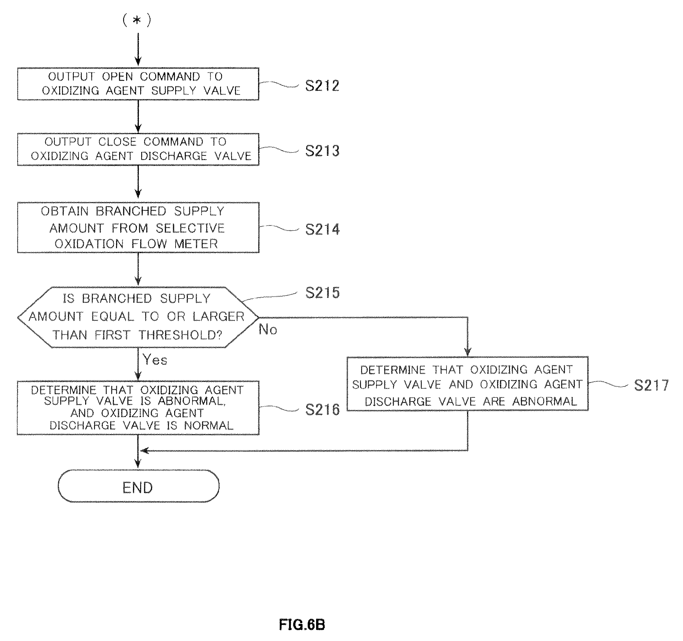

Figs. 6A and 6B are flow charts showing the open failure confirming operation of the on-off valve of the fuel cell system according to Modification Example 2 of Embodiment 1.

As shown in Figs. 6A and 6B, the controller 20 activates the air blower 12 (Step S201). Next, the controller 20 outputs the open command (open signal) to the oxidizing agent discharge valve 17 (Step S202) and outputs the close command (close signal) to the oxidizing agent supply valve 16 (Step S203). In a case where the selective oxidation air valve 18 is in a closed state, the controller 20 outputs the open command to the selective oxidation air valve 18.

Next, the controller 20 obtains from the selective oxidation flow meter 19 the flow rate (branched supply amount) of the oxidizing gas (air) flowing through the oxidizing gas branch passage 15, the flow rate being detected by the selective oxidation flow meter 19 (Step S204). Next, the controller 20 determines whether or not the branched supply amount obtained in Step S204 is equal to or larger than the preset first threshold (Step S205).

In a case where the branched supply amount obtained in Step S204 is equal to or larger than the first threshold (Yes in Step S205), the controller 20 proceeds to Step S206. In contrast, in a case where the branched supply amount obtained in Step S204 is smaller than the first threshold (No in Step S205), the controller 20 proceeds to Step S212.

In Step S206, the controller 20 outputs the open command (open signal) to the oxidizing agent supply valve 16. Next, the controller 20 outputs the close command (close signal) to the oxidizing agent discharge valve 17 (Step S207). Then, the controller 20 again obtains from the selective oxidation flow meter 19 the flow rate (branched supply amount) of the oxidizing gas (air) flowing through the oxidizing gas branch passage 15, the flow rate being detected by the selective oxidation flow meter 19 (Step S208).

Next, the controller 20 determines whether or not the branched supply amount obtained in Step S208 is equal to or larger than the preset first threshold (Step S209). In a case where the branched supply amount obtained in Step S208 is equal to or larger than the first threshold (Yes in Step S209), the controller 20 determines that the oxidizing agent supply valve 16 and the oxidizing agent discharge valve 17 are normal (Step S210). Then, the controller 20 terminates the present flow. In contrast, in a case where the branched supply amount obtained in Step S208 is smaller than the first threshold (No in Step S209), the controller 20 determines that the oxidizing agent supply valve 16 is normal, and the oxidizing agent discharge valve 17 is abnormal (Step S211). Then, the controller 20 terminates the present flow.

In a case where the branched supply amount obtained in Step S204 is smaller than the first threshold (No in Step S205), the controller 20 outputs the open command (open signal) to the oxidizing agent supply valve 16 (Step S212). Next, the controller 20 outputs the close command (close signal) to the oxidizing agent discharge valve 17 (Step S213). Then, the controller 20 again obtains from the selective oxidation flow meter 19 the flow rate (branched supply amount) of the oxidizing gas (air) flowing through the oxidizing gas branch passage 15, the flow rate being detected by the selective oxidation flow meter 19 (Step S214).

Next, the controller 20 determines whether or not the branched supply amount obtained in Step S214 is equal to or larger than the preset first threshold (Step S215). In a case where the branched supply amount obtained in Step S214 is equal to or larger than the first threshold (Yes in Step S215), the controller 20 determines that the oxidizing agent supply valve 16 is abnormal, and the oxidizing agent discharge valve 17 is normal (Step S216). Then, the controller 20 terminates the present flow. In contrast, in a case where the branched supply amount obtained in Step S214 is smaller than the first threshold (No in Step S215), the controller 20 determines that the oxidizing agent supply valve 16 and the oxidizing agent discharge valve 17 are abnormal (Step S217). Then, the controller 20 terminates the present flow.

The fuel cell system 1 according to Modification Example 2 configured as above also has the same operational advantages as the fuel cell system 1 according to Embodiment 1.

### Embodiment 2

The fuel cell system according to Embodiment 2 of the present invention is configured such that in a case where the supply amount of the oxidizing gas measured by the oxidizing gas supply amount measuring unit is smaller than the first threshold when the controller has activated the oxidizing gas supply unit and output the close signal to the on-off valve in a period (that is, in a start-up process of the fuel cell system) from when an operation of the fuel cell system has been started up until when supply of the fuel gas to the fuel cell is started, the controller stops the operation of the fuel cell system.

Since the configuration of the fuel cell system 1 according to Embodiment 2 is the same as that of the fuel cell system 1 according to Embodiment 1, an explanation thereof is omitted.

### Operations

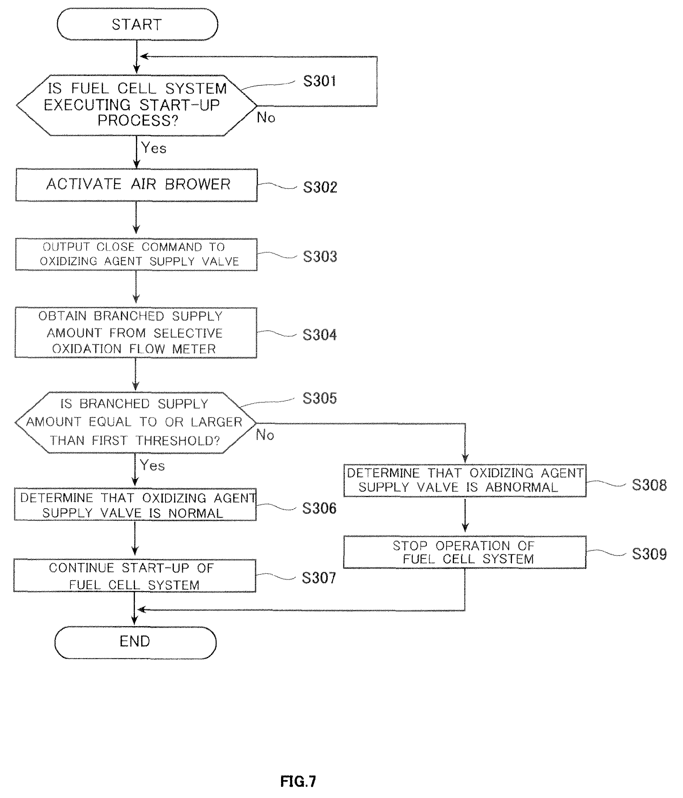

Fig. 7 is a flow chart showing the open failure confirming operation of the on-off valve of the fuel cell system according to Embodiment 2 of the present invention.

As shown in Fig. 7, the controller 20 determines whether or not the fuel cell system 1 is executing the start-up process (Step S301). In a case where the fuel cell system 1 is not executing the start-up process (No in Step S301), the controller 20 repeats Step S301 until the fuel cell system 1 executes the start-up process. In contrast, in a case where the fuel cell system 1 is executing the start-up process (Yes in Step S301), the controller 20 proceeds to Step S302.

In Step S302, the controller 20 activates the air blower 12. Next, the controller 20 outputs the close command (close signal) to the oxidizing agent supply valve 16 (Step S303). In a case where the selective oxidation air valve 18 is in a closed state, the controller 20 outputs the open command to the selective oxidation air valve 18.

Next, the controller 20 obtains from the selective oxidation flow meter 19 the flow rate (branched supply amount) of the oxidizing gas (air) flowing through the oxidizing gas branch passage 15, the flow rate being detected by the selective oxidation flow meter 19 (Step S304). Next, the controller 20 determines whether or not the branched supply amount obtained in Step S304 is equal to or larger than the preset first threshold (Step S305).

In a case where the branched supply amount obtained in Step S304 is equal to or larger than the first threshold (Yes in Step S305), the controller 20 determines that the oxidizing agent supply valve 16 is normal (Step S306), and continues the start-up process of the fuel cell system 1 (continues the operation of the fuel cell system 1 (Step S307)). Then, the controller 20 terminates the present flow. In contrast, in a case where the branched supply amount obtained in Step S304 is smaller than the first threshold (No in Step S305), the controller 20 determines that the oxidizing agent supply valve 16 is abnormal (Step S308), and stops the start-up process of the fuel cell system I (stops the operation of the fuel cell system 1 (Step S309)). Then, the controller 20 terminates the present flow.

At least one of Steps S306 and S308 may be omitted. In a case where the controller 20 determines that the open failure of the oxidizing agent supply valve 16 has occurred, the controller 20 may execute the open failure confirming operation of the on-off valve plural times in order to further avoid the misdetection. In a case where the controller determines in each of the open failure confirming operations that the open failure of the oxidizing agent supply valve 16 has occurred, the controller 20 may stop the operation of the fuel cell system 1.

The fuel cell system 1 according to Embodiment 2 configured as above also has the same operational advantages as the fuel cell system 1 according to Embodiment 1. In addition, according to the fuel cell system 1 of Embodiment 2, by executing the open failure confirming operation of the on-off valve during the start-up process of the fuel cell system 1, the open failure of the on-off valve can be detected without extending the start-up time.

### Modification Example 1

Next, Modification Example of the fuel cell system according to Embodiment 2 will be explained.

The fuel cell system according to Modification Example 1 of Embodiment 2 is configured such that in a case where the supply amount of the oxidizing gas measured by the oxidizing gas supply amount measuring unit is smaller than the first threshold when the controller has activated the oxidizing gas supply unit and output the close signal to the on-off valve in a period (that is, in the start-up process of the fuel cell system) from when an operation of the fuel cell system has been started up until when supply of the fuel gas to the fuel cell is started, the controller continues the operation of the fuel cell system and inhibits next start-up of the fuel cell system.

Since the configuration of the fuel cell system 1 according to Modification Example 1 of Embodiment 2 is the same as that of the fuel cell system 1 according to Embodiment 1, an explanation thereof is omitted.

### Operations

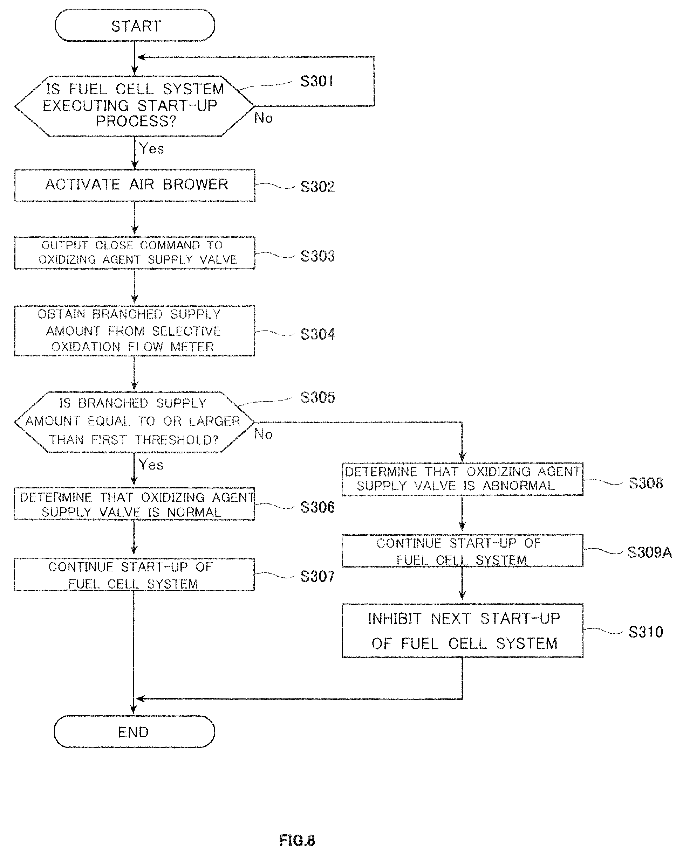

Fig. 8 is a flow chart showing the open failure confirming operation of the on-off valve of the fuel cell system according to Modification Example 1 of Embodiment 2.

The open failure confirming operation of the oxidizing agent supply valve 16 of the fuel cell system 1 according to Modification Example 1 of Embodiment 2 is basically the same as the open failure confirming operation of the fuel cell system 1 according to Embodiment 2 but is different from the open failure confirming operation of the fuel cell system 1 according to Embodiment 2 in that: Step S309A is executed instead of Step S309; and Step S310 is executed after Step S309A.

Specifically, even in a case where the controller 20 determines in Step S308 that the oxidizing agent supply valve 16 is abnormal, the controller 20 continues the start-up process of the fuel cell system 1 (continues the operation of the fuel cell system 1 (Step S309A)). In the power generating step of generating electric power by the fuel cell 2, the controller 20 keeps on transmitting the open signal to the oxidizing agent supply valve 16. Therefore, in a case where the open failure of the oxidizing agent supply valve 16 has occurred, that is, in a case where the oxidizing agent supply valve 16 remains open, the power generating step can be executed.

Next, the controller 20 inhibits the next start-up of the fuel cell system 1 (Step S310), and then terminates the present flow. Specifically, the controller 20 does not execute the start-up of the fuel cell system 1, for example, even in a case where the start-up command has been input to the controller 20 or in a case where a preset start-up time of the controller 20 has come.

The fuel cell system 1 according to Modification Example 1 configured as above has the same operational advantages as the fuel cell system 1 according to Embodiment 2.

In a case where the fuel cell system 1 is started up again when the open failure of the on-off valve has occurred, the fuel cell 2 increases in temperature. In addition, since the oxidizing gas is supplied to the fuel cell 2, the deterioration of the fuel cell 2 may be further caused. However, according to the fuel cell system 1 of Modification Example 1, in a case where the open failure of the on-off valve has occurred, the next start-up of the fuel cell system 1 is inhibited. With this, the deterioration of the fuel cell 2 can be suppressed. Thus, the reliability of the fuel cell system 1 can be further improved.

### Embodiment 3

The fuel cell system according to Embodiment 3 of the present invention is configured such that in a case where the supply amount of the oxidizing gas measured by the oxidizing gas supply amount measuring unit is smaller than the first threshold when the controller has activated the oxidizing gas supply unit and output the close signal to the on-off valve in a stop process of the fuel cell system or in a stand-by state of the fuel cell system, the controller inhibits next start-up of the fuel cell system.

Since the configuration of the fuel cell system 1 according to Embodiment 3 is the same as that of the fuel cell system 1 according to Embodiment 1, an explanation thereof is omitted.

### Operations

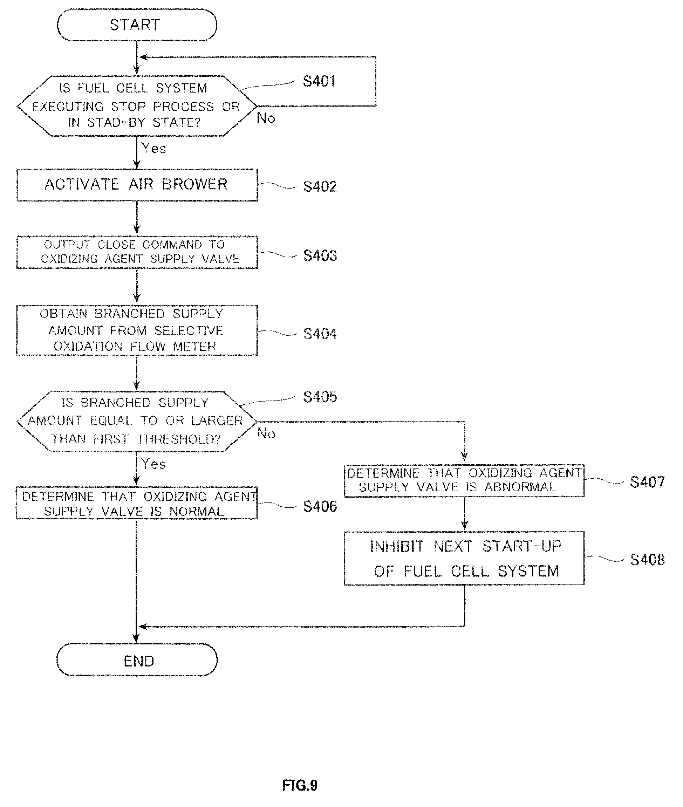

Fig. 9 is a flow chart showing the open failure confirming operation of the on-off valve of the fuel cell system according to Embodiment 3 of the present invention.

As shown in Fig. 9, the controller 20 determines whether or not the fuel cell system 1 is executing the stop process or is in the stand-by state (Step S401). In a case where the fuel cell system 1 is not executing the stop process and is not in the stand-by state (No in Step S401), the controller 20 repeats Step S401 until the fuel cell system 1 executes the stop process or becomes the stand-by state. In contrast, in a case where the fuel cell system 1 is executing the stop process or is in the stand-by state (Yes in Step S40), the controller 20 proceeds to Step S402.

In Step S402, the controller 20 activates the air blower 12. Next, the controller 20 outputs the close command (close signal) to the oxidizing agent supply valve 16 (Step S403). In a case where the selective oxidation air valve 18 is in a closed state, the controller 20 outputs the open command to the selective oxidation air valve 18.

Next, the controller 20 obtains from the selective oxidation flow meter 19 the flow rate (branched supply amount) of the oxidizing gas (air) flowing through the oxidizing gas branch passage 15, the flow rate being detected by the selective oxidation flow meter 19 (Step S404). Next, the controller 20 determines whether or not the branched supply amount obtained in Step S404 is equal to or larger than the preset first threshold (Step S405).

In a case where the branched supply amount obtained in Step S404 is equal to or larger than the first threshold (Yes in Step S405), the controller 20 determines that the oxidizing agent supply valve 16 is normal (Step S406). Then, the controller 20 terminates the present flow. In contrast, in a case where the branched supply amount obtained in Step S404 is smaller than the first threshold (No in Step S405), the controller 20 determines that the oxidizing agent supply valve 16 is abnormal (Step S407), and then inhibits the next start-up of the fuel cell system 1 (Step S408). Then, the controller 20 terminates the present flow. At least one of Steps S406 and S407 may be omitted.

The fuel cell system 1 according to Embodiment 3 configured as above also has the same operational advantages as the fuel cell system 1 according to Embodiment 1.

In a case where the fuel cell system 1 is started up again when the open failure of the on-off valve has occurred, the fuel cell 2 increases in temperature. In addition, since the oxidizing gas is supplied to the fuel cell 2, the deterioration of the fuel cell 2 may be further caused. However, according to the fuel cell system 1 of Embodiment 3, in a case where the open failure of the on-off valve has occurred, the next start-up of the fuel cell system 1 is inhibited. With this, the deterioration of the fuel cell 2 is suppressed. Thus, the reliability of the fuel cell system 1 can be further improved.

### Embodiment 4

The fuel cell system according to Embodiment 4 of the present invention is configured to include an adjusting unit configured to change a manipulation amount of the oxidizing gas supply unit based on the supply amount of the oxidizing gas measured by the oxidizing gas supply amount measuring unit, wherein in a case where the manipulation amount of the oxidizing gas supply unit is larger than a predetermined second threshold when the controller has activated the oxidizing gas supply unit and output the close signal to the on-off valve in a period from when an operation of the fuel cell system has been started up until when supply of the fuel gas to the fuel cell is started, the controller stops the operation of the fuel cell system.

### Configuration

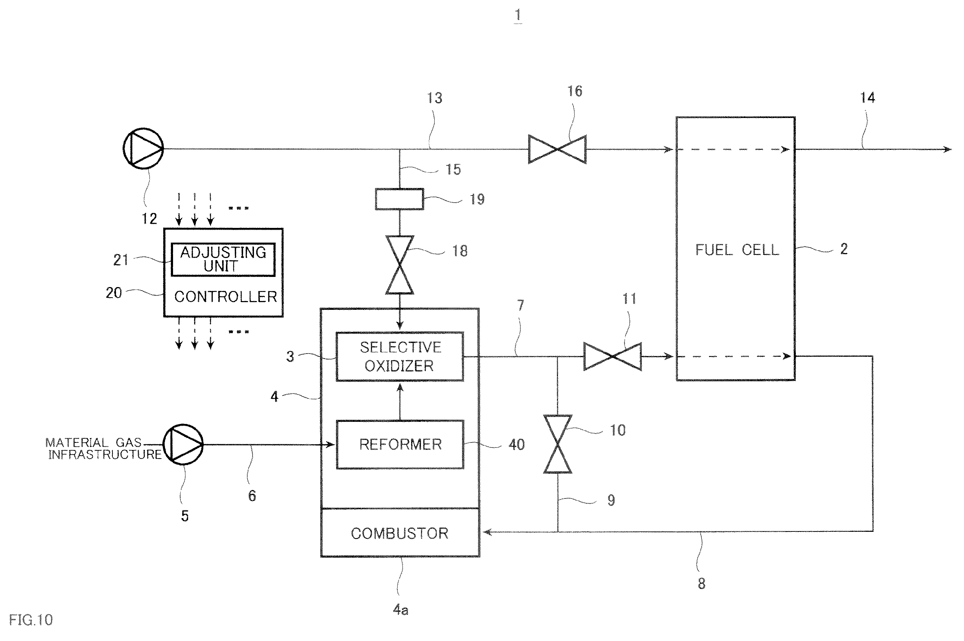

Fig. 10 is a schematic diagram showing the configuration of the fuel cell system according to Embodiment 4 of the present invention.

As shown in Fig. 10, the fuel cell system 1 according to Embodiment 4 of the present invention is the same in basic configuration as the fuel cell system 1 according to Embodiment 1 but is different from the fuel cell system I according to Embodiment 1 in that the fuel cell system 1 according to Embodiment 4 further includes an adjusting unit 21.

The adjusting unit 21 is realized by executing the program stored in the controller 20. The adjusting unit 21 is configured to change a manipulation amount of the air blower 12 based on an oxidizing gas supply amount (branched supply amount) measured by the selective oxidation flow meter 19. More specifically, the adjusting unit 21 controls the oxidizing gas supply amount by changing the manipulation amount of the air blower 12 such that the oxidizing gas supply amount detected by the selective oxidation flow meter 19 becomes an oxidizing gas supply amount corresponding to generated electric power. To be specific, the adjusting unit 21 is a unit configured to perform feedback control of the air blower 12. The adjusting unit 21 may be realized by a controller different from the controller 20.

### Operations

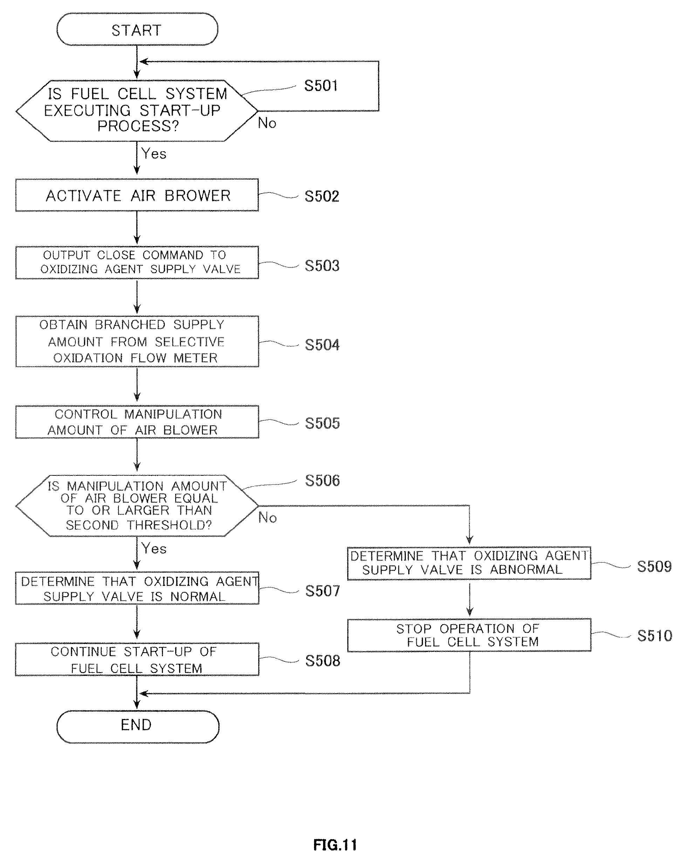

Fig. 11 is a flow chart showing the open failure confirming operation of the on-off valve of the fuel cell system according to Embodiment 4 of the present invention.

As shown in Fig. 11, the controller 20 determines whether or not the fuel cell system 1 is executing the start-up process (Step S501). In a case where the fuel cell system 1 is not executing the start-up process (No in Step S501), the controller 20 repeats Step S501 until the fuel cell system 1 executes the start-up process. In contrast, in a case where the fuel cell system 1 is executing the start-up process (Yes in Step S501), the controller 20 proceeds to Step S502.

In Step S502, the controller 20 activates the air blower 12. Next, the controller 20 outputs the close command (close signal) to the oxidizing agent supply valve 16 (Step S503). In a case where the selective oxidation air valve 18 is in a closed state, the controller 20 outputs the open command to the selective oxidation air valve 18.

Next, the controller 20 obtains from the selective oxidation flow meter 19 the flow rate (branched supply amount) of the oxidizing gas (air) flowing through the oxidizing gas branch passage 15, the flow rate being detected by the selective oxidation flow meter 19 (Step S504). Next, the adjusting unit 21 of the controller 20 controls the manipulation amount of the air blower 12 based on the branched supply amount obtained in Step S504.

Next, the controller 20 determines whether or not the manipulation amount of the air blower 12 controller by the adjusting unit 21 is equal to or smaller than a second threshold (Step S506). Here, it is preferable that the second threshold (%) be, for example, equal to or higher than 200% of a manipulation amount W set in a case where the air blower 12 is controlled such that the flow rate detected by the selective oxidation flow meter 19 when the oxidizing agent supply valve 16 is in a normally closed state becomes a predetermined branched supply amount Y (L/min).

In Step S503, the controller 20 transmits the close signal to the oxidizing agent supply valve 16. Therefore, in a case where the oxidizing agent supply valve 16 is in a closed state, the branched supply amount of oxidizing gas flowing through the oxidizing gas branch passage 15 does not decrease from the predetermined branched supply amount Y (L/min), and the adjusting unit 21 of the controller 20 does not change (increase) the manipulation amount of the air blower 12.

In contrast, in a case where the oxidizing agent supply valve 16 is in an open state, the oxidizing gas is supplied to the fuel cell 2. Therefore, the branched supply amount of oxidizing gas flowing through the oxidizing gas branch passage 15 decreases, and the adjusting unit 21 of the controller 20 increases the manipulation amount of the air blower 12 such that the supply amount of oxidizing gas becomes the predetermined branched supply amount Y (L/min). On this account, in a case where the manipulation amount of the air blower 12 increases, and the manipulation amount becomes larger than the second threshold although the close signal has been transmitted to the oxidizing agent supply valve 16, the controller 20 can determine that the open failure of the on-off valve is occurring.

In a case where the manipulation amount of the air blower 12 controlled by the adjusting unit 21 is equal to or smaller than the second threshold (Yes in Step S506), the controller 20 determines that the oxidizing agent supply valve 16 is normal (Step S507), and continues the start-up process of the fuel cell system 1 (continues the operation of the fuel cell system 1 (Step S508)). Then, the controller 20 terminates the present flow.

In contrast, in a case where the manipulation amount of the air blower 12 controlled by the adjusting unit 21 is larger than the second threshold (No in Step 5506), the controller 20 determines that the oxidizing agent supply valve 16 is abnormal (Step S509), and stops the start-up process of the fuel cell system 1 (stops the operation of the fuel cell system 1 (Step S510)). Then, the controller 20 terminates the present flow.

At least one of Steps S507 and S509 may be omitted. In a case where the controller 20 determines that the open failure of the oxidizing agent supply valve 16 has occurred, the controller 20 may execute the open failure confirming operation of the on-off valve plural times in order to further avoid the misdetection. In a case where the controller determines in each of the open failure confirming operations that the open failure of the oxidizing agent supply valve 16 has occurred, the controller 20 may stop the operation of the fuel cell system 1.

The fuel cell system 1 according to Embodiment 4 configured as above also has the same operational advantages as the fuel cell system 1 according to Embodiment 1. In addition, according to the fuel cell system 1 of Embodiment 4, by executing the open failure confirming operation of the on-off valve during the start-up process of the fuel cell system 1, the open failure of the on-off valve can be detected without extending the start-up time.

### Modification Example 1

Next, Modification Example of the fuel cell system according to Embodiment 4 will be explained.

The fuel cell system according to Modification Example 1 of Embodiment 4 is configured to include an adjusting unit configured to change a supply amount of the oxidizing gas supply unit based on the supply amount of the oxidizing gas measured by the oxidizing gas supply amount measuring unit, wherein in a case where the manipulation amount of the oxidizing gas supply unit is larger than a predetermined second threshold when the controller has activated the oxidizing gas supply unit and output the close signal to the on-off valve in a period from when an operation of the fuel cell system has been started up until when supply of the fuel gas to the fuel cell is started, the controller continues the operation of the fuel cell system and inhibits next start-up of the fuel cell system.

Since the configuration of the fuel cell system 1 according to Modification Example 1 of Embodiment 4 is the same as that of the fuel cell system 1 according to Embodiment 4, an explanation thereof is omitted.

### Operations

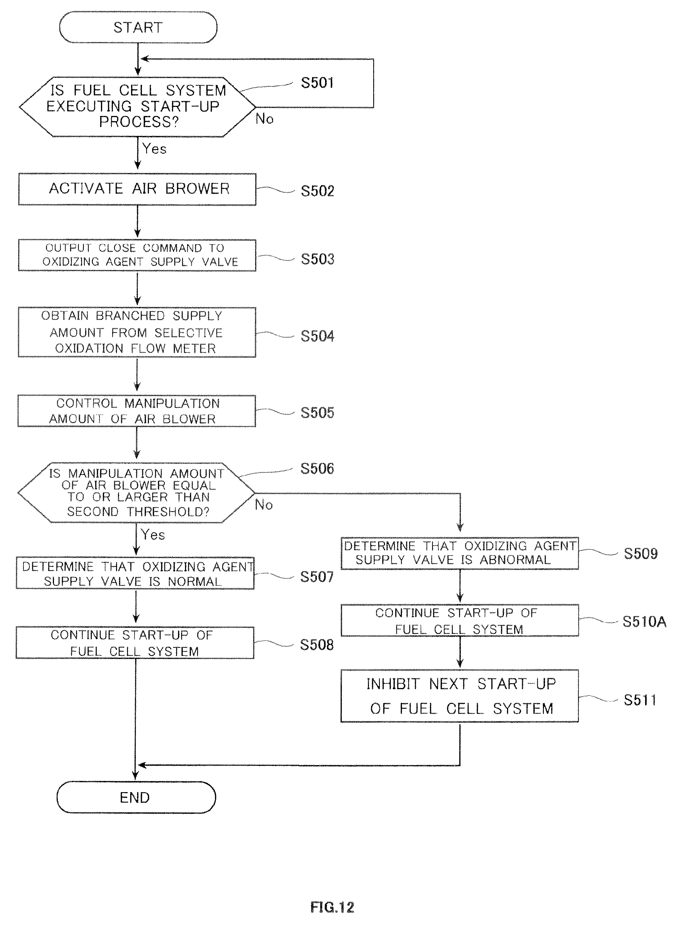

Fig. 12 is a flow chart showing the open failure confirming operation of the on-off valve of the fuel cell system according to Modification Example 1 of Embodiment 4.

The open failure confirming operation of the oxidizing agent supply valve 16 of the fuel cell system 1 according to Modification Example 1 of Embodiment 4 is basically the same as the open failure confirming operation of the fuel cell system 1 according to Embodiment 4 but is different from the open failure confirming operation of the fuel cell system 1 according to Embodiment 4 in that: Step S510A is executed instead of Step S510; and Step S511 is executed after Step S510A.

Specifically, even in a case where the controller 20 determines in Step S509 that the oxidizing agent supply valve 16 is abnormal, the controller 20 continues the start-up process of the fuel cell system 1 (continues the operation of the fuel cell system 1 (Step S510A)). In the power generating step of generating electric power by the fuel cell 2, the controller 20 keeps on transmitting the open signal to the oxidizing agent supply valve 16. Therefore, in a case where the open failure of the oxidizing agent supply valve 16 has occurred, that is, in a case where the oxidizing agent supply valve 16 remains open, the power generating step can be executed. Then, the controller 20 inhibits the next start-up of the fuel cell system 1 (Step S511), and terminates the present flow.

The fuel cell system 1 according to Modification Example 1 configured as above also has the same operational advantages as the fuel cell system 1 according to Embodiment 4.

In a case where the fuel cell system 1 is started up again when the open failure of the on-off valve has occurred, the fuel cell 2 increases in temperature. In addition, since the oxidizing gas is supplied to the fuel cell 2, the deterioration of the fuel cell 2 may be further caused. However, according to the fuel cell system 1 of Modification Example 1, in a case where the open failure of the on-off valve has occurred, the next start-up of the fuel cell system 1 is inhibited. With this, the deterioration of the fuel cell 2 can be suppressed. Thus, the reliability of the fuel cell system 1 can be further improved.

### Embodiment 5

The fuel cell system according to Embodiment 5 of the present invention is configured to include: a case configured to house the fuel cell; and a discharge passage through which a gas in the case is discharged, wherein a downstream end of the oxidizing gas branch passage is connected to the discharge passage.

### Configuration

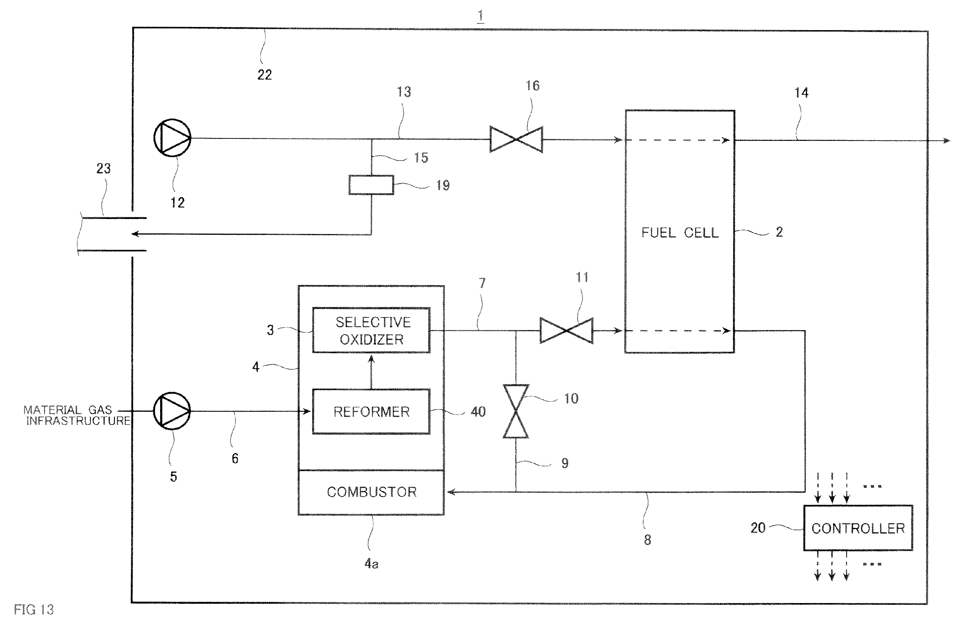

Fig. 13 is a schematic diagram showing the configuration of the fuel cell system according to Embodiment 5 of the present invention.

As shown in Fig. 13, the fuel cell system 1 according to Embodiment 5 of the present invention is the same in basic configuration as the fuel cell system 1 according to Embodiment 1 but is different from the fuel cell system 1 according to Embodiment 1 in that: the fuel cell system 1 according to Embodiment 5 further includes a case 22 configured to house respective devices, such as the fuel cell 2, constituting the fuel cell system 1 and a discharge passage 23 through which a gas in the case 22 is discharged; and the downstream end of the oxidizing gas branch passage 15 is connected to the discharge passage 23.

More specifically, the discharge passage 23 is provided so as to communicate with an exhaust port (not shown) of the case 22. Since the downstream end of the oxidizing gas branch passage 15 is connected to the discharge passage 23, the gas in the case 22 is discharged through the oxidizing gas supply passage 13, the oxidizing gas branch passage 15, and the case 22 to the outside of the case 22 by the operation of the air blower 12.

Air is supplied to the selective oxidizer 3 by a fan, a blower, or the like, not shown. A valve configured to allow and block the flow of the gas in the oxidizing gas branch passage 15 may be disposed on a portion of the oxidizing gas branch passage 15, the portion being located downstream of the selective oxidation flow meter 19.

The fuel cell system 1 according to Embodiment 5 configured as above also has the same operational advantages as the fuel cell system 1 according to Embodiment 1.

### Embodiment 6

The fuel cell system according to Embodiment 6 of the present invention is configured such that: the fuel gas supply unit includes a reformer configured to generate the fuel gas and a combustor configured to heat the reformer; and a downstream end of the oxidizing gas branch passage is connected to the combustor.

### Configuration

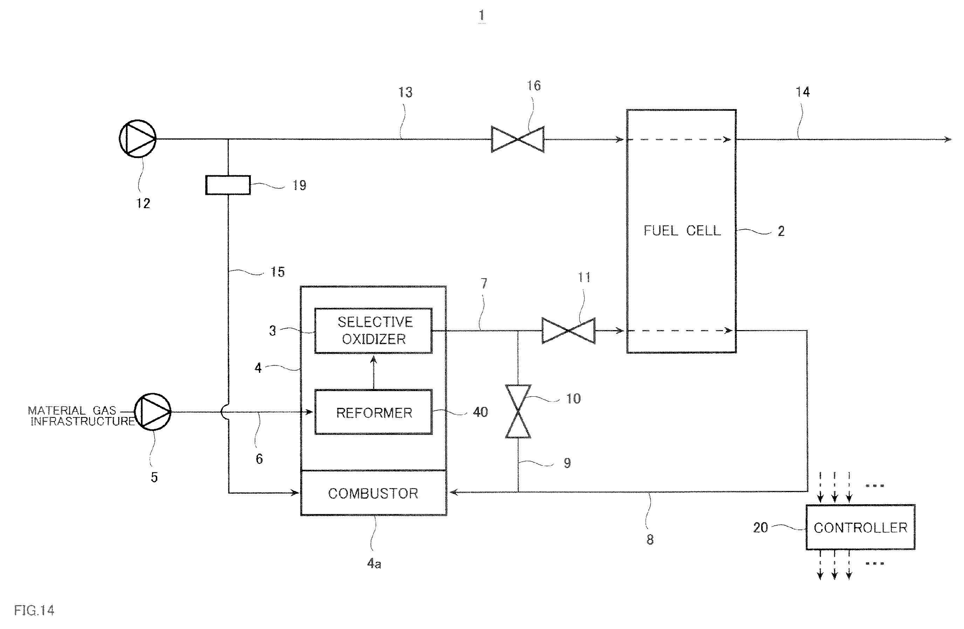

Fig. 14 is a schematic diagram showing the configuration of the fuel cell system according to Embodiment 6 of the present invention.

As shown in Fig. 14, the fuel cell system 1 according to Embodiment 6 of the present invention is the same in basic configuration as the fuel cell system 1 according to Embodiment 1 but is different from the fuel cell system 1 according to Embodiment 1 in that the downstream end of the oxidizing gas branch passage 15 is connected to the combustor 4a.

The fuel cell system 1 according to Embodiment 6 configured as above also has the same operational advantages as the fuel cell system 1 according to Embodiment 1.

### Embodiment 7

The fuel cell system according to Embodiment 7 of the present invention is configured such that: the fuel gas supply unit includes a reformer configured to generate the fuel gas; and a downstream end of the oxidizing gas branch passage is connected to the reformer.

### Configuration

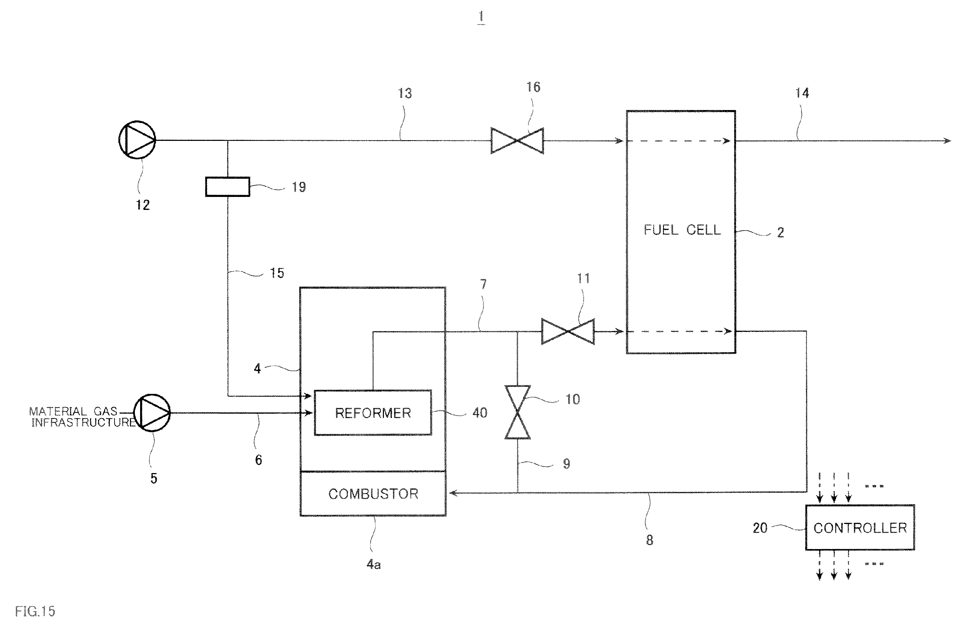

Fig. 15 is a schematic diagram showing the configuration of the fuel cell system according to Embodiment 7 of the present invention.

As shown in Fig. 15, the fuel cell system 1 according to Embodiment 7 of the present invention is the same in basic configuration as the fuel cell system 1 according to Embodiment 1 but is different from the fuel cell system 1 according to Embodiment 1 in that the downstream end of the oxidizing gas branch passage 15 is connected to the reformer 40.

In Embodiment 7, the reformer 40 includes a catalyst in which a carrier, such as alumina, supports nickel, and is configured to perform partial oxidation reforming (CH₄ + 1/2O₂ → CO + 2H₂). As the fuel cell 2, an indirect internal reforming type solid-oxide fuel cell is used.

As the fuel cell 2, a direct internal reforming type solid-oxide fuel cell, a molten carbon salt type fuel cell, or a polymer electrolyte fuel cell may be used. In the case of using the polymer electrolyte fuel cell, it is preferable that a shift converter or the selective oxidizer 3 be provided downstream of the reformer 40 in the hydrogen generator 4. A valve configured to allow and block the flow of the gas in the oxidizing gas branch passage 15 may be disposed on a portion of the oxidizing gas branch passage 15, the portion being located downstream of the selective oxidation flow meter 19.

The fuel cell system 1 according to Embodiment 7 configured as above also has the same operational advantages as the fuel cell system 1 according to Embodiment 1.

### Industrial Applicability

Since the fuel cell system and its operating method according to the present invention can detect the failure of the valve quickly, they are useful in the field of fuel cells.

### Reference Signs List

- 1: fuel cell system

- 2: fuel cell
- 3: selective oxidizer
- 4: hydrogen generator
- 4a: combustor
- 5: material blower
- 6: material gas supply passage
- 7: fuel gas passage
- 8: exhaust gas passage
- 9: bypass passage
- 10: bypass valve
- 11: anode inlet valve
- 12: air blower
- 13: oxidizing gas supply passage
- 14: oxidizing gas discharge passage
- 15: oxidizing gas branch passage
- 16: oxidizing agent supply valve
- 17: oxidizing agent discharge valve
- 18: selective oxidation air valve
- 19: selective oxidation flow meter
- 20: controller
- 21: adjusting unit
- 22: case
- 23: discharge passage
- 40: reformer
- 201: fuel cell system
- 202: fuel cell stack
- 202A: oxidation gas passage
- 213: air compressor
- 214: oxidation gas supply passage
- 215: oxidation gas discharge passage
- 217: oxidation gas supply shut valve
- 220: oxidation gas discharge shut valve
- 221: cathode pressure gauge

## Claims

1. A fuel cell system comprising:
a fuel cell (2) configured to generate electric power using a hydrogen-containing fuel gas and an oxygen-containing oxidizing gas;
a fuel gas supply unit configured to supply the fuel gas to the fuel cell;
an oxidizing gas supply unit configured to supply the oxidizing gas to the fuel cell;
an oxidizing gas supply passage (13) through which the oxidizing gas is supplied from the oxidizing gas supply unit to the fuel cell;
an oxidizing gas discharge passage (14) through which the oxidizing gas unconsumed in the fuel cell is discharged from the fuel cell;
an oxidizing gas branch passage (15) configured to branch from the oxidizing gas supply passage;
an on-off valve disposed on at least one of the oxidizing gas discharge passage and a portion of the oxidizing gas supply passage, the portion being located between the fuel cell and a branched portion where the oxidizing gas branch passage branches from the oxidizing gas supply passage;
an oxidizing gas supply amount measuring unit disposed on the oxidizing gas branch passage and configured to measure a supply amount of the oxidizing gas; and
a controller (20), **characterized in that** the controller is configured to
determine that the on-off valve is normal in a case where the supply amount of the oxidizing gas measured by the oxidizing gas supply amount measuring unit is equal to or larger than a preset first threshold when the controller has activated the oxidizing gas supply unit and output a close signal to the on-off valve, and
determine that the on-off valve is abnormal in a case where the supply amount of the oxidizing gas measured by the oxidizing gas supply amount measuring unit is smaller than the first threshold when the controller has activated the oxidizing gas supply unit and output the close signal to the on-off valve.

2. The fuel cell system according to claim 1, wherein in a case where the supply amount of the oxidizing gas measured by the oxidizing gas supply amount measuring unit is smaller than the first threshold when the controller (20) has activated the oxidizing gas supply unit and output the close signal to the on-off valve in a period from when an operation of the fuel cell system has been started up until when supply of the fuel gas to the fuel cell is started, the controller stops the operation of the fuel cell system.

3. The fuel cell system according to claim 1, wherein in a case where the supply amount of the oxidizing gas measured by the oxidizing gas supply amount measuring unit is smaller than the first threshold when the controller (20) has activated the oxidizing gas supply unit and output the close signal to the on-off valve in a period from when an operation of the fuel cell system has been started up until when supply of the fuel gas to the fuel cell is started, the controller continues the operation of the fuel cell system and inhibits next start-up of the fuel cell system.

4. The fuel cell system according to any one of claims 1 to 3, wherein in a case where the supply amount of the oxidizing gas measured by the oxidizing gas supply amount measuring unit is smaller than the first threshold when the controller (20) has activated the oxidizing gas supply unit and output the close signal to the on-off valve in a stop process of the fuel cell system or in a stand-by state of the fuel cell system, the controller inhibits next start-up of the fuel cell system.

5. The fuel cell system according to any one of claims 1 to 3, further comprising an adjusting unit (21) configured to change a manipulation amount of the oxidizing gas supply unit based on the supply amount of the oxidizing gas measured by the oxidizing gas supply amount measuring unit, wherein
in a case where the manipulation amount of the oxidizing gas supply unit is larger than a predetermined second threshold when the controller (20) has activated the oxidizing gas supply unit and output the close signal to the on-off valve in a period from when an operation of the fuel cell system has been started up until when supply of the fuel gas to the fuel cell is started, the controller stops the operation of the fuel cell system.

6. The fuel cell system according to any one of claims 1 to 3, further comprising an adjusting unit (21) configured to change a supply amount of the oxidizing gas supply unit based on the supply amount of the oxidizing gas measured by the oxidizing gas supply amount measuring unit, wherein
in a case where the manipulation amount of the oxidizing gas supply unit is larger than a predetermined second threshold when the controller (20) has activated the oxidizing gas supply unit and output the close signal to the on-off valve in a period from when an operation of the fuel cell system has been started up until when supply of the fuel gas to the fuel cell is started, the controller continues the operation of the fuel cell system and inhibits next start-up of the fuel cell system.

7. The fuel cell system according to any one of claims 1 to 6, wherein:
the fuel gas supply unit includes a selective oxidizer (3) configured to remove carbon monoxide in the fuel gas; and
a downstream end of the oxidizing gas branch passage is connected to the selective oxidizer.

8. The fuel cell system according to any one of claims 1 to 6, further comprising:
a case (22) configured to house the fuel cell; and
a discharge passage (23) through which a gas in the case is discharged, wherein
a downstream end of the oxidizing gas branch passage is connected to the discharge passage.

9. The fuel cell system according to any one of claims 1 to 6, wherein:
the fuel gas supply unit includes a reformer (40) configured to generate the fuel gas and a combustor configured to heat the reformer; and
a downstream end of the oxidizing gas branch passage is connected to the combustor.

10. The fuel cell system according to any one of claims 1 to 6, wherein:
the fuel gas supply unit includes a reformer (40) configured to generate the fuel gas; and
a downstream end of the oxidizing gas branch passage is connected to the reformer.

11. A method of operating a fuel cell system,
the fuel cell system comprising: 4
a fuel cell (2) configured to generate electric power using a hydrogen-containing fuel gas and an oxygen-containing oxidizing gas;
a fuel gas supply unit configured to supply the fuel gas to the fuel cell;
an oxidizing gas supply unit configured to supply the oxidizing gas to the fuel cell;
an oxidizing gas supply passage (13) through which the oxidizing gas is supplied from the oxidizing gas supply unit to the fuel cell;
an oxidizing gas discharge passage (14) through which the oxidizing gas unconsumed in the fuel cell is discharged from the fuel cell;
an oxidizing gas branch passage (15) configured to branch from the oxidizing gas supply passage;
an on-off valve disposed on at least one of the oxidizing gas discharge passage and a portion of the oxidizing gas supply passage, the portion being located between the fuel cell and a branched portion where the oxidizing gas branch passage branches from the oxidizing gas supply passage; and
an oxidizing gas supply amount measuring unit disposed on the oxidizing gas branch passage and configured to measure a supply amount of the oxidizing gas,
**characterized in that** a controller (20)
determines that the on-off valve is normal in a case where the supply amount of the oxidizing gas measured by the oxidizing gas supply amount measuring unit is equal to or larger than a preset first threshold when the controller has activated the oxidizing gas supply unit and output a close signal to the on-off valve, and determines that the on-off valve is abnormal in a case where the supply amount of the oxidizing gas measured by the oxidizing gas supply amount measuring unit is smaller than the first threshold when the controller has activated the oxidizing gas supply unit and output the close signal to the on-off valve.

## Patentansprüche

1. Brennstoffzellensystem, umfassend:
eine Brennstoffzelle (2), die dazu eingerichtet ist, elektrischen Strom mit Hilfe eines wasserstoffhaltigen Brennstoffgases und eines sauerstoffhaltigen Oxidationsgases zu erzeugen;
eine Brennstoffgas-Zuführeinheit, die dazu eingerichtet ist, das Brennstoffgas der Brennstoffzelle zuzuführen;
eine Oxidationsgas-Zuführeinheit, die dazu eingerichtet ist, das Oxidationsgas der Brennstoffzelle zuzuführen;
eine Oxidationsgas-Zuführleitung (13), durch die das Oxidationsgas von der Oxidationsgas-Zuführeinheit der Brennstoffzelle zugeführt wird;
eine Oxidationsgas-Auslassleitung (14), durch die das Oxidationsgas, das in der Brennstoffzelle nicht verbraucht wird, aus der Brennstoffzelle ausgegeben wird;
eine Oxidationsgas-Abzweigleitung (15), die dazu eingerichtet ist, von der Oxidationsgas-Zuführleitung abzuzweigen;
ein Ein-Aus-Ventil, das an der Oxidationsgas-Auslassleitung und/oder einem Abschnitt der Oxidationsgas-Zuführleitung angeordnet ist, wobei sich der Abschnitt zwischen der Brennstoffzelle und einem abgezweigten Abschnitt befindet, an dem die OxidationsgasAbzweigleitung von der Oxidationsgas-Zuführleitung abzweigt;
eine Oxidationsgaszuführmengen-Messeinheit, die an der Oxidationsgas-Abzweigleitung angeordnet und dazu eingerichtet ist, eine Zuführmenge des Oxidationsgases zu messen; und
eine Steuereinheit (20), **dadurch gekennzeichnet, dass** die Steuereinheit dazu eingerichtet ist
zu bestimmen, dass sich das Ein-Aus-Ventil in einem normalen Zustand befindet, wenn die Zuführmenge des Oxidationsgases, die von der Oxidationsgaszuführmengen-Messeinheit gemessen wird, größer oder gleich einem ersten Schwellenwert ist, wenn die Steuereinheit die Oxidationsgas-Zuführeinheit aktiviert und ein Schließsignal des Ein-Aus-Ventils ausgegeben hat, und
zu bestimmen, dass sich das Ein-Aus-Ventil in einem abnormen Zustand befindet, in dem die Zuführmenge des Oxidationsgases, die von der Oxidationsgaszuführmengen-Messeinheit gemessen wird, kleiner als der erste Schwellenwert ist, wenn die Steuereinheit die Oxidationsgas-Zuführeinheit aktiviert und das Schließsignal des Ein-Aus-Ventils ausgegeben hat.

2. Brennstoffzellensystem nach Anspruch 1, bei dem für den Fall, dass die Zuführmenge des Oxidationsgases, die von der Oxidationsgaszuführmengen-Messeinheit gemessen wird, kleiner ist als der erste Schwellenwert, wenn die Steuereinheit (20) die Oxidationsgas-Zuführeinheit aktiviert und das Schließsignal an das Ein-Aus-Ventil in einer Periode ausgegeben hat, ab der ein Betrieb des Brennstoffzellensystems begonnen hat, bis die Zufuhr des Brennstoffgases zu der Brennstoffzelle begonnen hat, die Steuereinheit den Betrieb des Brennstoffzellensystems stoppt.

3. Brennstoffzellensystem nach Anspruch 1, bei dem für den Fall, dass die Zuführmenge des Oxidationsgases, die von der Oxidationsgaszuführmengen-Messeinheit gemessen wird, kleiner ist als der erste Schwellenwert, wenn die Steuereinheit (20) die Oxidationsgas-Zuführeinheit aktiviert und das Schließsignal an das Ein-Aus-Ventil in einer Periode ausgegeben hat, ab der ein Betrieb des Brennstoffzellensystems begonnen hat, bis die Zufuhr des Brennstoffgases zu der Brennstoffzelle begonnen hat, die Steuereinheit den Betrieb des Brennstoffzellensystems fortsetzt und einen nächsten Start des Brennstoffzellensystems verhindert.

4. Brennstoffzellensystem nach einem der Ansprüche 1 bis 3, bei dem für den Fall, dass die Zuführmenge des Oxidationsgases, die von der Oxidationsgaszuführmengen-Messeinheit gemessen wird, kleiner ist als der erste Schwellenwert, wenn die Steuereinheit (20) die Oxidationsgas-Zuführeinheit aktiviert und das Schließsignal an das Ein-Aus-Ventil in einem Stoppvorgang des Brennstoffzellensystems oder in einem Bereitschaftszustand des Brennstoffzellensystems ausgegeben hat, die Steuereinheit den nächsten Start des Brennstoffzellensystems verhindert.

5. Brennstoffzellensystem nach einem der Ansprüche 1 bis 3, weiterhin umfassend eine Justiereinheit (21), die dazu eingerichtet ist, eine Manipulationsmenge der Oxidationsgas-Zuführeinheit auf der Basis der Zuführmenge des Oxidationsgases zu ändern, die von der Oxidationsgaszuführmengen-Messeinheit gemessen wird, wobei
für den Fall, dass die Manipulationsmenge der Oxidationsgas-Zuführeinheit größer ist als ein vorbestimmter zweiter Schwellenwert, wenn die Steuereinheit (20) die Oxidationsgas-Zuführeinheit aktiviert und das Schließsignal an das Ein-Aus-Ventil in einer Periode ausgegeben hat, ab der ein Betrieb des Brennstoffzellensystems begonnen hat, bis die Zufuhr des Brennstoffgases zu der Brennstoffzelle begonnen hat, die Steuereinheit den Betrieb des Brennstoffzellensystems stoppt.

6. Brennstoffzellensystem nach einem der Ansprüche 1 bis 3, weiterhin umfassend eine Einstelleinheit (21), die dazu eingerichtet ist, eine Zuführmenge der Oxidationsgas-Zuführeinheit auf der Basis der Zuführmenge des Oxidationsgases zu ändern, die von der Oxidationsgaszuführmengen-Messeinheit gemessen wird, wobei
für den Fall, dass die Manipulationsmenge der Oxidationsgas-Zuführeinheit größer ist als ein vorbestimmter zweiter Schwellenwert, wenn die Steuereinheit (20) die Oxidationsgas-Zuführeinheit aktiviert und das Schließsignal an das Ein-Aus-Ventil in einer Periode ausgegeben hat, ab der ein Betrieb des Brennstoffzellensystems begonnen hat, bis die Zufuhr des Brennstoffgases zu der Brennstoffzelle begonnen hat, die Steuereinheit den Betrieb des Brennstoffzellensystems fortführt und einen nächsten Start des Brennstoffzellensystems verhindert.

7. Brennstoffzellensystem nach einem der Ansprüche 1 bis 6, bei dem:
die Brennstoffgas-Zuführeinheit ein selektives Oxidationsmittel (3) umfasst, das dazu eingerichtet ist, Kohlenmonoxid in dem Brennstoffgas zu entfernen; und
ein stromabwärtiges Ende der Oxidationsgas-Abzweigleitung mit dem selektiven Oxidationsmittel verbunden ist.

8. Brennstoffzellensystem nach einem der Ansprüche 1 bis 6, weiterhin umfassend:
ein Gehäuse (22), das dazu eingerichtet ist, die Brennstoffzelle aufzunehmen; und
eine Auslassleitung (23), durch die ein Gas in dem Gehäuse ausgegeben wird, wobei ein stromabwärtiges Ende der Oxidationsgas-Abzweigleitung mit der Auslassleitung verbunden ist.

9. Brennstoffzellensystem nach einem der Ansprüche 1 bis 6, bei dem:
die Brennstoffgas-Zuführeinheit einen Reformer (40), der dazu eingerichtet ist, das Brennstoffgas zu erzeugen, und einen Verbrenner umfasst, der dazu eingerichtet ist, den Reformer zu erwärmen; und
ein stromabwärtiges Ende der Oxidationsgas-Abzweigleitung mit dem Verbrenner verbunden ist.

10. Brennstoffzellensystem nach einem der Ansprüche 1 bis 6, bei dem:
die Brennstoffgas-Zuführeinheit einen Reformer (40) umfasst, der dazu eingerichtet ist, das Brennstoffgas zu erzeugen; und ein stromabwärtiges Ende der Oxidationsgas-Abzweigleitung mit dem Reformer verbunden ist.

11. Verfahren zum Betreiben eines Brennstoffzellensystems,
wobei das Brennstoffzellensystem umfasst:
eine Brennstoffzelle (2), die dazu eingerichtet ist, elektrischen Strom mit Hilfe eines wasserstoffhaltigen Brennstoffgases und eines sauerstoffhaltigen Oxidationsgases zu erzeugen;
eine Brennstoffgas-Zuführeinheit, die dazu eingerichtet ist, das Brennstoffgas der Brennstoffzelle zuzuführen;
eine Oxidationsgas-Zuführeinheit, die dazu eingerichtet ist, das Oxidationsgas der Brennstoffzelle zuzuführen;
eine Oxidationsgas-Zuführleitung (13), durch die das Oxidationsgas von der Oxidationsgas-Zuführeinheit der Brennstoffzelle zugeführt wird;
eine Oxidationsgas-Auslassleitung (14), durch die das Oxidationsgas, das in der Brennstoffzelle nicht verbraucht wird, aus der Brennstoffzelle ausgegeben wird;
eine Oxidationsgas-Abzweigleitung (15), die dazu eingerichtet ist, von der Oxidationsgas-Zuführleitung abzuzweigen;
ein Ein-Aus-Ventil, das an der Oxidationsgas-Auslassleitung und/oder einem Abschnitt der Oxidationsgas-Zuführleitung angeordnet ist, wobei sich der Abschnitt zwischen der Brennstoffzelle und einem abgezweigten Abschnitt befindet, an dem die Oxidationsgas-Abzweigleitung von der Oxidationsgas-Zuführleitung abzweigt; und
eine Oxidationsgaszuführmengen-Messeinheit, die an der Oxidationsgas-Abzweigleitung angeordnet und dazu eingerichtet ist, eine Zuführmenge des Oxidationsgases zu messen;
**dadurch gekennzeichnet, dass** eine Steuereinheit (20)
bestimmt, dass sich das Ein-Aus-Ventil in einem normalen Zustand befindet, wenn die Zuführmenge des Oxidationsgases, die von der Oxidationsgaszuführmengen-Messeinheit gemessen wird, größer oder gleich einem ersten Schwellenwert ist, wenn die Steuereinheit die Oxidationsgas-Zuführeinheit aktiviert und ein Schließsignal des Ein-Aus-Ventils ausgegeben hat, und
bestimmt, dass sich das Ein-Aus-Ventil in einem abnormen Zustand befindet, in dem die Zuführmenge des Oxidationsgases, die von der Oxidationsgaszuführmengen-Messeinheit gemessen wird, kleiner als der erste Schwellenwert ist, wenn die Steuereinheit die Oxidationsgas-Zuführeinheit aktiviert und das Schließsignal des Ein-Aus-Ventils ausgegeben hat.

## Revendications

1. Système de pile à combustible comprenant :
une pile à combustible (2) configurée pour générer de l'énergie électrique en utilisant un gaz combustible contenant de l'hydrogène et un gaz oxydant contenant de l'oxygène,
une unité d'alimentation de gaz combustible configurée pour alimenter le gaz combustible à la pile à combustible ;
une unité d'alimentation de gaz oxydant configurée pour alimenter le gaz oxydant à la pile à combustible ;
un passage d'alimentation de gaz oxydant (13) à travers lequel le gaz oxydant est fourni de l'unité d'alimentation de gaz oxydant à la pile à combustible ;
un passage d'évacuation de gaz oxydant (14) à travers lequel le gaz oxydant non consommé dans la pile à combustible est évacué de la pile à combustible ;
un passage de dérivation de gaz oxydant (15) configuré pour établir une dérivation à partir du passage d'alimentation de gaz oxydant ;
une vanne tout ou rien disposée dans au moins un passage parmi le passage d'évacuation de gaz oxydant et une portion du passage d'alimentation de gaz oxydant, la portion étant située entre la pile à combustible et une portion dérivée où le passage de dérivation de gaz oxydant est dérivé du passage d'alimentation de gaz oxydant ;
une unité de mesure de quantité d'alimentation de gaz oxydant disposée dans le passage de dérivation de gaz oxydant et configurée pour mesurer une quantité d'alimentation du gaz oxydant ; et
un contrôleur (20), **caractérisé en ce que** le contrôleur est configuré pour
déterminer que la vanne tout ou rien est normale dans le cas où la quantité d'alimentation du gaz oxydant mesurée par l'unité de mesure de quantité d'alimentation de gaz oxydant est supérieure ou égale à un premier seuil prédéterminé quand le contrôleur a activé l'unité d'alimentation de gaz oxydant et a sorti un signal de fermeture de la vanne tout ou rien, et
déterminer que la vanne tout ou rien est anormale dans le cas où la quantité d'alimentation du gaz oxydant mesurée par l'unité de mesure de quantité d'alimentation de gaz oxydant est inférieure au premier seuil prédéterminé quand le contrôleur a activé l'unité d'alimentation de gaz oxydant et a sorti le signal de fermeture de la vanne tout ou rien.

2. Système de pile à combustible selon la revendication 1, dans lequel, dans le cas où la quantité d'alimentation du gaz oxydant mesurée par l'unité de mesure de quantité d'alimentation de gaz oxydant est inférieure au premier seuil prédéterminé, quand le contrôleur (20) a activé l'unité d'alimentation de gaz oxydant et a sorti le signal de fermeture de la vanne tout ou rien dans une période allant du moment où un fonctionnement du système de pile à combustible a été démarré jusqu'à un moment où l'alimentation du gaz combustible à la pile à combustible est démarrée, le contrôleur arrête le fonctionnement du système de pile à combustible.

3. Système de pile à combustible selon la revendication 1, dans lequel, dans le cas où la quantité d'alimentation du gaz oxydant mesurée par l'unité de mesure de quantité d'alimentation de gaz oxydant est inférieure au premier seuil prédéterminé, quand le contrôleur (20) a activé l'unité d'alimentation de gaz oxydant et a sorti le signal de fermeture de la vanne tout ou rien dans une période allant du moment où un fonctionnement du système de pile à combustible a été démarré jusqu'à un moment où l'alimentation du gaz combustible à la pile à combustible est démarrée, le contrôleur maintient le fonctionnement du système de pile à combustible et inhibe le prochain démarrage du système de pile à combustible.

4. Système de pile à combustible selon l'une quelconque des revendications 1 à 3, dans lequel, dans le cas où la quantité d'alimentation du gaz oxydant mesurée par l'unité de mesure de quantité d'alimentation de gaz oxydant est inférieure au premier seuil prédéterminé, quand le contrôleur (20) a activé l'unité d'alimentation de gaz oxydant et a sorti le signal de fermeture de la vanne tout ou rien dans un processus d'arrêt du système de pile à combustible ou dans un état d'attente du système de pile à combustible, le contrôleur inhibe le prochain démarrage du système de pile à combustible.

5. Système de pile à combustible selon l'une quelconque des revendications 1 à 3, comprenant en outre une unité d'ajustement (21) configurée pour changer une quantité de manipulation de l'unité d'alimentation de gaz oxydant sur base de la quantité d'alimentation du gaz oxydant mesurée par l'unité de mesure de quantité d'alimentation de gaz oxydant, dans lequel
dans le cas où la quantité de manipulation de l'unité d'alimentation de gaz oxydant est supérieure à un deuxième seuil prédéterminé quand le contrôleur (20) a activé l'unité d'alimentation de gaz oxydant et a sorti le signal de fermeture de la vanne tout ou rien dans une période allant du moment où un fonctionnement du système de pile à combustible a été démarré jusqu'à un moment où l'alimentation du gaz combustible à la pile à combustible est démarrée, le contrôleur arrête le fonctionnement du système de pile à combustible.

6. Système de pile à combustible selon l'une quelconque des revendications 1 à 3, comprenant en outre une unité d'ajustement (21) configurée pour changer une quantité d'alimentation de l'unité d'alimentation de gaz oxydant sur base de la quantité d'alimentation du gaz oxydant mesurée par l'unité de mesure de quantité d'alimentation de gaz oxydant, dans lequel
dans le cas où la quantité de manipulation de l'unité d'alimentation de gaz oxydant est supérieure à un deuxième seuil prédéterminé quand le contrôleur (20) a activé l'unité d'alimentation de gaz oxydant et a sorti le signal de fermeture de la vanne tout ou rien dans une période allant du moment où un fonctionnement du système de pile à combustible a été démarré jusqu'à un moment où l'alimentation du gaz combustible à la pile à combustible est démarrée, le contrôleur maintient le fonctionnement du système de pile à combustible et inhibe le prochain démarrage du système de pile à combustible.

7. Système de pile à combustible selon l'une quelconque des revendications 1 à 6, dans lequel :
l'unité d'alimentation de gaz combustible comprend un oxydant sélectif (3) configuré pour éliminer le monoxyde de carbone présent dans le gaz combustible ; et
une extrémité aval du passage de dérivation de gaz oxydant est connectée à l'oxydant sélectif.

8. Système de pile à combustible selon l'une quelconque des revendications 1 à 6, comprenant en outre :
un boîtier (22) configuré pour loger la pile à combustible ; et
un passage d'évacuation (23) à travers lequel un gaz présent dans le boîtier est évacué, dans lequel
une extrémité aval du passage de dérivation de gaz oxydant est connectée au passage de dérivation.

9. Système de pile à combustible selon l'une quelconque des revendications 1 à 6, dans lequel :
l'unité d'alimentation de gaz combustible comprend un reformeur (40) configuré pour générer le gaz combustible et une chambre de combustion configurée pour chauffer le reformeur ; et
une extrémité aval du passage de dérivation de gaz oxydant est connectée à la chambre de combustion.

10. Système de pile à combustible selon l'une quelconque des revendications 1 à 6, dans lequel :
l'unité d'alimentation de gaz combustible comprend un reformeur (40) configuré pour générer le gaz combustible ; et
une extrémité aval du passage de dérivation de gaz oxydant est connectée au reformeur.

11. Procédé de fonctionnement d'un système de pile à combustible,
le système de pile à combustible comprenant :
une pile à combustible (2) configurée pour générer de l'énergie électrique en utilisant un gaz combustible contenant de l'hydrogène et un gaz oxydant contenant de l'oxygène,
une unité d'alimentation de gaz combustible configurée pour alimenter le gaz combustible à la pile à combustible ;
une unité d'alimentation de gaz oxydant configurée pour alimenter le gaz oxydant à la pile à combustible ;
un passage d'alimentation de gaz oxydant (13) à travers lequel le gaz oxydant est fourni de l'unité d'alimentation de gaz oxydant à la pile à combustible ;
un passage d'évacuation de gaz oxydant (14) à travers lequel le gaz oxydant non consommé dans la pile à combustible est évacué de la pile à combustible ;
un passage de dérivation de gaz oxydant (15) configuré pour établir une dérivation du passage d'alimentation de gaz oxydant ;
une vanne tout ou rien disposée dans au moins un passage parmi le passage d'évacuation de gaz oxydant et une portion du passage d'alimentation de gaz oxydant, la portion étant située entre la pile à combustible et une portion dérivée où le passage de dérivation de gaz oxydant est dérivé du passage d'alimentation de gaz oxydant ; et
une unité de mesure de quantité d'alimentation de gaz oxydant disposée dans le passage de dérivation de gaz oxydant et configurée pour mesurer une quantité d'alimentation du gaz oxydant, **caractérisé en ce qu'**un contrôleur (20)
détermine que la vanne tout ou rien est normale dans le cas où la quantité d'alimentation du gaz oxydant mesurée par l'unité de mesure de quantité d'alimentation de gaz oxydant est supérieure ou égale à un premier seuil prédéterminé quand le contrôleur a activé l'unité d'alimentation de gaz oxydant et a sorti un signal de fermeture de la vanne tout ou rien, et
détermine que la vanne tout ou rien est anormale dans le cas où la quantité d'alimentation du gaz oxydant mesurée par l'unité de mesure de quantité d'alimentation de gaz oxydant est inférieure au premier seuil prédéterminé quand le contrôleur a activé l'unité d'alimentation de gaz oxydant et a sorti le signal de fermeture de la vanne tout ou rien.
